(19) Europäisches Patentamt

European Patent Office

Office européen des brevets

(11) **EP 1 208 171 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(21) Anmeldenummer: **00954636.7**

(22) Anmeldetag: **17.08.2000**

(51) Int Cl.$^7$: **C09D 133/06**, C09D 183/04, C09D 185/00, B05D 7/26

(86) Internationale Anmeldenummer:
**PCT/EP00/08032**

(87) Internationale Veröffentlichungsnummer:
**WO 01/016242 (08.03.2001 Gazette 2001/10)**

(54) **SOL-GEL-ÜBERZUG**

SOL-GEL COATING

REVETEMENT SOL-GEL

(84) Benannte Vertragsstaaten:
**AT BE CH CY DE DK ES FI FR GB GR IE IT LI LU MC NL PT SE**

(30) Priorität: **27.08.1999 DE 19940857**

(43) Veröffentlichungstag der Anmeldung:
**29.05.2002 Patentblatt 2002/22**

(73) Patentinhaber: **BASF Coatings AG**
**48165 Münster (DE)**

(72) Erfinder:
• **ARMBRUST, Manuela**
**48165 Münster (DE)**
• **HINTZE-BRÜNING, Horst**
**48165 Münster (DE)**
• **STÜBBE, Wilfried**
**48268 Greven (DE)**
• **BETZ, Peter**
**48165 Münster (DE)**
• **EHLIG, Christel**
**48165 Münster (DE)**

(74) Vertreter: **Fitzner, Uwe, Dr. et al**
**Lintorfer Strasse 10**
**40878 Ratingen (DE)**

(56) Entgegenhaltungen:
**WO-A-00/53687**

• **CHEMICAL ABSTRACTS, vol. 84, no. 18, 3. Mai 1976 (1976-05-03) Columbus, Ohio, US; abstract no. 123536w, Seite 94; XP002153878 & JP 50 095388 A (TOA GOSEI CHEM IND CO LTD) 29. Juli 1975 (1975-07-29)**

## Beschreibung

Die vorliegende Erfindung betrifft einen neuen Sol-Gel-Beschichtungsstoff zur Herstellung von Sol-Gel-Überzügen auf einschichtigen oder mehrschichtigen Lackierungen. Insbesondere betrifft die vorliegende Erfindung ein neues Verfahren zur Herstellung von lackierten Substraten, insbesondere von lackierten Automobilkarosserien, bei dem die Substrate zunächst mit einer Mehrschichtlackierung versehen werden, wonach hierauf ein Sol-Gel-Beschichtungsstoff aufgetragen und ausgehärtet wird.

Automobilkarosserien sind größtenteils mit einem mehrschichtigen Lackaufbau versehen. Als letzte Überzugsschicht werden häufig Klarlacke aufgetragen. Hierfür kommen die üblichen und bekannten Einkomponenten (1K)-, Zweikomponenten (2K)-, Mehrkomponenten (3K, 4K)- Pulver- oder Pulverslurry-Klarlacke oder UV-härtbare Klarlacke in Betracht.

Einkomponenten(1K)-, Zweikomponenten(2K)- oder Mehrkomponenten(3K, 4K)-Klarlacke werden beispielsweise in den Patentschriften US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 beschrieben.

Pulverklarlacke sind beispielsweise aus der deutschen Patentschrift DE-A-42 22 194 oder der Produkt-Information der Firma BASF Lacke + Farben AG, "Pulverlacke", 1990 bekannt.

Bei Pulverslurry-Lacken handelt es sich um Pulverlacke in Form wäßriger Dispersionen. Derartige Slurries sind beispielsweise in der US Patentschrift US-A-4,268,542 und den deutschen Patentanmeldungen DE-A-195 18 392.4 und DE-A-196 13 547 und der nicht vorveröffentlichten deutschen Patentanmeldung DE-A-198 14 471.7 beschrieben.

UV-härtbare Klarlacke gehen beispielsweise aus den Patentschriften EP-A-0 540 884, EP-A-0 568 967 oder US-A-4,675,234 hervor.

Jeder dieser Klarlacke weist seine spezifischen Stärken und Schwächen auf. So erhält man mit Hilfe dieser Klarlacke Mehrschichtlackierungen, die den optischen Anforderungen genügen. Indes sind die kratzfesten Einkomponenten(1K)-Klarlacke manchmal nicht genügend witterungsbeständig, wogegen die witterungsbeständigen Zweikomponenten(2K)- oder Mehrkomponenten(3K, 4K)-Klarlacke oftmals nicht genügend kratzfest sind. Manche Einkomponenten(1K)-Klarlacke sind zwar kratzfest und witterungsstabil, weisen aber in Kombination mit häufig angewandten Wasserbasislacken Oberflächenstörungen wie Schrumpf (wrinkling) auf.

Pulverklarlacke, Pulverslurry-Klarlacke und UV-härtbare Klarlacke dagegen weisen eine nicht völlig befriedigende Zwischenschichthaftung auf, ohne daß die Probleme der Kratzfestigkeit oder der Etchbeständigkeit völlig gelöst wären.

In neuerer Zeit wurden sogenannte Sol-Gel-Klarlacke auf Basis von siloxanhaltigen Lackformulierungen entwickelt, die durch Hydrolyse und Kondensation von Silanverbindungen erhalten werden. Diese Lacke, die als Überzugsmittel für Beschichtungen von Kunststoffen verwendet werden, werden beispielsweise in den deutschen Patentschriften DE-A-43 03 570, DE-A-34 07 087, DE-A-40 11 045, DE-A-40 25 215, DE-A-38 28 098, DE-A-40 20 316 oder DE-A-41 22 743 beschrieben.

Sol-Gel-Klarlacke verleihen Kunststoff-Substraten wie z. B. Brillengläsern oder Motorradhelm-Visieren eine sehr gute Kratzfestigkeit. Diese Kratzfestigkeit wird von den bekannten OEM (Original Equipment Manufacturing)-Klarlacken, die üblicherweise bei der Erstlackierung von Fahrzeugen verwendet werden, nicht erreicht. Seitens der Automobilindustrie wird nun die Anforderung gestellt, diese verbesserte Kratzfestigkeit auch auf die bei der Lackierung von Automobilen verwendeten Klarlackschichten zu übertragen.

Der Ersatz der üblicherweise in der Automobillackierung eingesetzten OEM-Klarlacke oder OEM-Pulverslurry-Klarlacke durch Sol-Gel-Klarlacke ist indes nicht ohne weiteres möglich, weil sie hierfür z. B. zu spröde sind oder weil bei dem Versuch, sie an die OEM-Anforderungen anzupassen, häufig nur schlechte optische Eigenschaften (Appearance) erzielt werden. Vor allem sind die Sol-Gel-Klarlacke zu teuer. Der ökonomisch günstigere Einsatz der Sol-Gel-Klarlacke als zusätzliche Überzugsschicht über die bisher verwendeten Klarlacke bzw. Pulverslurry-Klarlacke ergibt Haftungsprobleme zwischen dem Klarlack und der Sol-Gel-Schicht, die insbesondere nach Steinschlag und bei Belastung durch Schwitzwasser auftreten.

Diese Probleme können dadurch gelöst werden, daß man die Klarlackschicht, welche mit dem Sol-Gel-Klarlack überzogen werden soll, nur teilweise aushärtet, so daß der Sol-Gel-Überzug bei dem gemeinsamen Aushärten gewissermaßen chemisch auf der Klarlackschicht verankert werden kann. Indes erfordert dieses Vorgehen, daß in ein und derselben Lackierlinie die Klarlackschichten auf Automobilkarosserien, die überschichtet werden sollen, bei einer anderen Temperatur ausgehärtet werden müssen, als die Klarlackschichten der anderen Automobilkarosserien, die nicht überschichtet werden sollen. Die Anwendung unterschiedlicher Härtungsbedingungen in einer Lackierlinie stellt einen wesentlichen Nachteil dar. Dieser Nachteil wiegt noch schwerer, weil die zweite Klarlackschicht für ihre Aushärtung eine lange Ofentrocknungszeit erfordert.

Aufgabe der vorliegenden Erfindung ist es, einen neuen Sol-Gel-Beschichtungsstoff bereitzustellen, welcher es gestattet die vorteilhaften Eigenschaften der Sol-Gel-Überzüge mit den vorteilhaften Eigenschaften der bekannten einschichtigen oder mehrschichtigen Lackierungen, insbesondere der mehrschichtigen Lackierungen für die Automobilerstlackierung, zu kombinieren, ohne daß dabei von den üblicherweise angewandten Lackierverfahren, insbesondere dem Naß-in-naß-Verfahren bei der Automobilerstlackierung, abgewichen werden muß. Mit anderen Worten soll es der neue Sol-Gel-Beschichtungsstoff insbesondere gestatten, nachträglich in kurzer Zeit einen kratzfesten Überzug auf fertige, bereits ausgehärtete Lackierungen aufzubringen, ohne daß hierbei Haftungsprobleme auftreten.

Demgemäß wurde der neue Sol-Gel-Beschichtungsstoff gefunden, enthaltend

(A) eine Acrylatcopolymerisatlösung, enthaltend mindestens ein Acrylatcopolymerisat (A1), herstellbar durch Copolymerisation mindestens der folgenden Monomeren:

a1) mindestens ein im wesentlichen säuregruppenfreier (Meth)acrylsäureester,

a2) mindestens ein ethylenisch ungesättigtes Monomer, das mindestens eine Hydroxylgruppe pro Molekül trägt und im wesentlichen säuregruppenfrei ist, und

a3) mindestens ein mindestens eine Säuregruppe, die in die entsprechende Säureaniongruppe überführbar ist, pro Molekül tragendes ethylenisch ungesättigtes Monomer;

(B) ein Sol, herstellbar durch Hydrolyse, Kondensation und Komplexierung

B1) mindestens einer hydrolysierbaren Metallverbindung der allgemeinen Formel I

$$MR_n \qquad (I),$$

worin die Variablen und der Index die folgende Bedeutung haben:

M =   Aluminium, Titan oder Zirkonium,

R =   hydrolysierbare Gruppen, Hydroxygruppen und nicht hydrolysierbare Gruppen, mit der Maßgabe, daß mindestens eine, vorzugsweise mindestens zwei, hydrolysierbare Gruppe(n) vorhanden ist oder sind, und

n =   3 oder 4;

B2) mindestens eines hydrolysierbaren Silans der allgemeinen Formel II

$$Si(R^1)_2(R^2)_2 \qquad (II),$$

worin die Variablen $R^1$ und $R^2$ die folgende Bedeutung haben:

$R^1$ =   Alkyl- und/oder Cycloalkylreste und

$R^2$ =   Alkoxy- und/oder Cycloalkoxyreste;

und

B3) mindestens eines hydrolysierbaren Silans der allgemeinen Formel III

$$SiR_4 \qquad (III),$$

worin die Variable R die vorstehend angegebene Bedeutung hat;
mit der Maßgabe, daß es sich bei dem Silan (B3) nicht um ein Silan (B2) gemäß der allgemeinen Formel II handelt,

und

(C) 0 bis 40 Gew.-%, bezogen auf die Gesamtmenge des Beschichtungsstoffs, eines Stammlacks, herstellbar durch Hydrolyse und Kondensation mindestens eines hydrolysierbaren Silans (B3) der allgemeinen Formel III.

Im folgenden wird der neue Sol-Gel-Beschichtungsstoff als "erfindungsgemäßer Beschichtungsstoff" bezeichnet.

Außerdem wurde das neue Verfahren zur Herstellung von Sol-Gel-Überzügen auf einschichtigen oder mehrschichtigen Lackierungen durch

(i) Applikation einer einschichtigen oder mehrschichtigen Lackierung auf einem gegebenenfalls grundierten Substrat,

(ii) Applikation eines Sol-Gel-Beschichtungsstoffs auf der einschichtigen oder mehrschichtigen Lackierung und

(iii) Aushärten des Sol-Gel-Beschichtungsstoffs,

gefunden, das dadurch gekennzeichnet ist, daß man hierbei einen erfindungsgemäßen Beschichtungsstoff verwendet.

Bevorzugt wird der Beschichtungsstoff mit mittlerer IR-Strahlung ausgehärtet.

In folgenden wird das neue Verfahren zur Herstellung von Sol-Gel-Überzügen auf einschichtigen oder mehrschichtigen Lackierungen der Kürze halber als "erfindungsgemäßes Verfahren" bezeichnet.

Des weiteren wurden neue Sol-Gel-Überzüge gefunden, welche aus den erfindungsgemäßen Beschichtungsstoffen herstellbar sind und im folgenden als "erfindungsgemäße Sol-Gel-Überzüge" bezeichnet werden.

Nicht zuletzt wurden neue Substrate gefunden, welche mindestens einen erfindungsgemäßen Sol-Gel-Überzug aufweisen und im folgenden als "erfindungsgemäße Substrate" bezeichnet werden.

Im Hinblick auf den Stand der Technik war es überraschend und für den Fachmann nicht vorhersehbar, daß die der Erfindung zugrundeliegende Aufgabe mit Hilfe des erfindungsgemäßen Beschichtungsstoffs und des erfindungsgemäßen Verfahrens gelöst werden konnte. Insbesondere war es überraschend, daß der erfindungsgemäße Beschichtungsstoff ohne Probleme auf den fertigen, ausgehärteten Lackierungen haftet, ohne daß es bei Steinschlag oder nach der Belastung im Schwitzwasser, d. h. eine zehntätige Belastung der Schichten in einer Atmosphäre von 40 °C und 100% relativer Luftfeuchtigkeit, zu Ablösungen oder Rissen kommt. Auch die optischen Eigenschaften der mit den erfindungsgemäßen Sol-Gel-Überzügen versehenen Lackierungen genügen allen Ansprüchen.

Bei dem erfindungsgemäßen Beschichtungsstoff handelt es sich um eine siloxanhaltige Lackformulierung, die durch Umsetzung von hydrolysierbaren Siliciumverbindungen mit Wasser oder Wasser abspaltenden Mitteln hergestellt werden kann und die zur Verbesserung bestimmter Eigenschaften organische Bestandteile enthält. Eine allgemeine Beschreibung von solchen Systemen findet sich beispielsweise in dem Artikel von Bruce M. Novak, "Hybrid Nanocomposite Materials - Between Inorganic Glasses and Organic Polymers", in Advanced Materials, 1993, 5, Nr.6, S. 422-433, oder in dem Vortrag von R. Kasemann, H. Schmidt, 15. International Conference, International Centre for Coatings Technology, Paper 7, "Coatings for mechanical and chemical protection based on organic-inorganic Sol-Gel Nanocomposites", 1993.

Die Basisreaktionen finden in einem Sol-Gel-Prozeß statt, bei dem Tetraorthosilikate gegebenenfalls in Gegenwart eines Co-Lösemittels hydrolysiert und kondensiert werden:

Hydrolyse:

$$Si(OR)_4 + H_2O \rightarrow (RO)_3Si\text{-}OH + ROH$$

Kondensation:

$$-Si\text{-}OH + HO\text{-}Si\text{-} \rightarrow -Si\text{-}O\text{-}Si\text{-} + H_2O$$

$$-Si\text{-}OH + RO\text{-}Si\text{-} \rightarrow -Si\text{-}O\text{-}Si\text{-} + ROH$$

wobei R eine Alkylgruppe, wie Methyl oder Ethyl sein kann. Häufig werden Tetramethylorthosilikat (TMOS) oder Tetraethylorthosilikat (TEOS) eingesetzt. Zur Katalyse der Reaktionen werden Säuren, Basen oder Fluoridionen eingesetzt.

Bei dem erfindungsgemäßen Beschichtungsstoff handelt es sich demnach um siloxanhaltige Strukturen, die mit organischen Bestandteilen modifiziert sind (Ormocer® = Organically Modified Ceramic).

Der erfindungsgemäße Sol-Gel-Überzug wird durch gezielte Hydrolyse und Kondensation sowie Komplexierung von Kieselsäureestern und von Metallverbindungen hergestellt. Spezielle Eigenschaften erhält er durch den Einbau organisch modifizierter Kieselsäurederivate in das silicatische Netzwerk. Sie erlauben den Aufbau eines organischen Polymernetzwerks zusätzlich zum anorganischen Grundgerüst, wenn organische Reste vorzugsweise mit olefinisch ungesättigten Gruppen und/oder Epoxidgruppen eingesetzt werden.

Die Modifizierung kann z. B. dadurch erfolgen, daß während der Hydrolyse und Kondensation der Ausgangsprodukte oder im Sol ein fertiges organisches Polymer anwesend ist.

Der erfindungsgemäße Beschichtungsstoff enthält die beiden wesentlichen Bestandteilen (A) und (B) oder besteht aus diesen. Vorzugsweise enthält er die beiden wesentlichen Bestandteile (A) und (B) sowie mindestens einen geeigneten zusätzlichen Bestandteil.

Bei der Komponente (A) handelt es sich um eine Acrylatcopolymerisatlösung. Vorzugsweise ist diese frei von aromatischen Lösemitteln. Im Rahmen der vorliegenden Erfindung bedeutet der Begriff "frei von aromatischen Lösemitteln" oder "aromatenfrei" hier und im folgenden, daß der Gehalt an aromatischen Lösemitteln oder aromatischen Verbindungen in einer Lösung vorzugsweise <5 Gew.-%, bevorzugt <1 Gew.-%, besonders bevorzugt <0,5 Gew.-% und ganz besonders bevorzugt <0,2 Gew.-% beträgt und insbesondere unterhalb der gaschromatographischen Nachweisgrenze liegt.

Die erfindungsgemäß zu verwendende Acrylatcopolymerisatlösung (A) enthält mindestens ein Acrylatcopolymerisat (A1), welches durch die Copolymersiation der nachstehend genannten Monomere (a1), (a2) und (a3) sowie gegebenenfalls weiterer Monomere (a4), (a5) und/oder (a6) hergestellt wird, wobei (a1), (a2) und (a3) sowie gegebenenfalls (a4), (a5) und (a6) in Art und Menge so ausgewählt werden, daß das Acrylatcopolymerisat(A1) die gewünschte OH-Zahl, Säurezahl und das gewünschte Molekulargewicht aufweist. Vorzugsweise weisen die Acrylatcopolymerisate (A1) eine Hydroxylzahl von 40 bis 240, besonders bevorzugt 60 bis 210 und insbesondere 100 bis 200, eine Säurezahl von 5 bis 100, besonders bevorzugt 10 bis 60 und insbesondere 20 bis 40, Glasübergangstemperaturen von -35 bis +85°C und zahlenmittlere Molekulargewichte Mn von 1.000 bis 300.000 auf.

Zur Herstellung der erfindungsgemäß eingesetzten Polyacrylatharze kann als Monomer (a1) jeder mit (a2), (a3), (a4), (a5) und (a6) copolymerisierbare (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth) Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate; verwendet werden. Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-dioldi(meth)acrylat; Trimethylolpropan-di- oder -tri(meth)acrylat; oder Pentaerythritdi-, -tri- oder -tetra(meth)acrylat enthalten. Im Rahmen der vorliegenden Erfindung sind hierbei unter untergeordneten Mengen an höherfunktionellen Monomeren (a1) solche Mengen zu verstehen, welche nicht zur Vernetzung oder Gelierung der Polyacrylatharze führen.

Als Monomere (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind, wie Hydroxyalkylester der Acrylsäure, Methacrylsäure oder einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; 1,4-Bis(hydroxymethyl)cyclohexan-, Octahydro-4,7-methano-1H-inden-dimethanoloder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether; verwendet werden. Hinsichtlich dieser höherfunktionellen Monomeren (a2) gilt das für die höherfunktionellen Monomeren (a1) Gesagte sinngemäß. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere (a2), insbesondere aber anteilsmäßig in Kombination mit anderen der genannten hydroxylgruppenhaltigen Monomeren (a2), eingesetzt werden.

Als Monomer (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren verwendet werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Komponente (a3) kommen desweiteren Maleinsäuremono(meth)acryloyloxyethylester, Bernsteinsäuremono(meth)acryloyloxyethylester und Phthalsäuremono(meth)acryloyloxyethylester in Betracht.

Als Monomere (a4) können ein oder mehrere Vinylester von in alpha-Stellung verzweigten Monocarbonsäuren mit 5 bis 18 C-Atomen im Molekül eingesetzt werden. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Monomer (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryloder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Monomere (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren verwendet werden. Als Komponente (a6) kommen

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;

- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol, und/oder Vinyltoluol;

- Nitrile wie Acrylnitril und/oder Methacrylnitril;

- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure; und/oder

- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A-37 06 095 in den Spalten 3 bis 7, der EP-B-0 358 153 auf den Seiten 3 bis 6, in der US-A-4,754,014 in den Spalten 5 bis 9, in der DE-A-44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure;

in Betracht.

Vorzugsweise werden vinylaromatische Kohlenwasserstoffe, insbesondere Styrol, eingesetzt.

Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze werden erhalten durch Polymerisation von

(a1) 20 bis 60 Gew.-%, bevorzugt 30 bis 50 Gew.-%, der Komponente (a1),

(a2) 10 bis 50 Gew.-%, bevorzugt 15 bis 40 Gew.-%, der Komponente (a2),

(a3) 1 bis 15 Gew.-%, bevorzugt 1 bis 8 Gew.-%, der Komponente (a3),

(a4) 0 bis 25 Gew.-% der Komponente (a4),

(a5) 0 bis 25 Gew.-% der Komponente (a5) und

(a6) 5 bis 30 Gew.-%, bevorzugt 10 bis 20 Gew.-%, der Komponente (a6),

wobei die Summe der Gewichtsanteile der Komponenten (a1) bis (a6) jeweils 100 Gew.-% beträgt.

Die Herstellung der erfindungsgemäß eingesetzten Acrylatcopolymerisate (A1) erfolgt in einem organischen Lösemittel oder Lösemittelgemisch, welches vorzugsweise frei ist von aromatischen Lösungsmitteln, und in Gegenwart mindestens eines Polymerisationsinitiators. Als Polymerisationsinitiatoren werden die für die Herstellung von Acrylatcopolymerisaten üblichen Polymerisationsinitiatoren eingesetzt.

Beispiele geeigneter Polymerisationsinitiatoren sind freie Radikale bildende Initiatoren, wie z.B. tert.-Butylperoxyethylhexanoat, Benzoylperoxid, Di-tert.-Amylperoxid, Azobisisobutyronitril und tert.-Butylperbenzoat. Die Initiatoren werden bevorzugt in einer Menge von 1 bis 25 Gew.-%, besonders bevorzugt von 2 bis 10 Gew.-%, bezogen auf das Gesamtgewicht der Monomeren, eingesetzt.

Die Polymerisation wird zweckmäßigerweise bei einer Temperatur von 80 bis 200 °C, vorzugsweise 110 bis 180 °C, durchgeführt.

Bevorzugt werden als Lösemittel Ethoxyethylpropionat und Isopropoxypropanol eingesetzt.

Bevorzugt wird das Acrylatcopolymerisat (A1) nach einem Zweistufenverfahren hergestellt, da so die resultierenden erfindungsgemäßen Beschichtungsstoffe eine bessere Verarbeitbarkeit aufweisen. Bevorzugt werden daher Acrylatcopolymerisate (A1) eingesetzt, die erhältlich sind, indem

1. ein Gemisch aus den Monomeren (a1) und (a2) sowie gegebenenfalls (a4), (a5) und/oder (a6) oder ein Gemisch aus Teilen der Monomeren (a1) und (a2) sowie gegebenenfalls (a4), (a5) und/oder (a6) in einem organischen Lösemittel polymerisiert wird und

2. nachdem mindestens 60 Gew.-% des aus (a1) und (a2) sowie gegebenenfalls (a4) (a5) und/oder (a6) bestehenden Gemisches zugegeben worden sind, das Monomer (a3) und der gegebenenfalls vorhandene Rest der Monomeren (a1) und (a2) sowie gegebenenfalls (a4), (a5) und/oder (a6) zugegeben wird oder werden und weiter polymerisiert wird.

Daneben ist es aber auch möglich, die Monomeren (a4) und/oder (a5) zusammen mit zumindest einem Teil des Lösemittels vorzulegen und die restlichen Monomeren zuzudosieren. Außerdem können auch die Monomeren (a4) und/oder (a5) nur teilweise zusammen mit zumindest einem Teil des Lösemittels in die Vorlage gegeben werden und der Rest dieser Monomeren, wie oben beschrieben, zugegeben werden. Bevorzugt werden beispielsweise mindestens 20 Gew.-% des Lösemittels und ca. 10 Gew.-% der Monomeren (a4) und (a5) sowie gegebenenfalls Teilen der Monomeren (a1) und (a6) vorgelegt.

Bevorzugt ist außerdem die Herstellung der erfindungsgemäß eingesetzten Acrylatpolymerisate (A1) durch ein Zweistufenverfahren, bei dem die erste Stufe 1 bis 8 Stunden, vorzugsweise 1,5 bis 4 Stunden, dauert und die Zugabe der Mischung aus (a3) und dem gegebenenfalls vorhandenen Rest der Monomeren (a1) und (a2) sowie gegebenenfalls (a4), (a5) und (a6) innerhalb von 20 bis 120 Minuten, vorzugsweise innerhalb von 30 bis 90 Minuten, erfolgt. Nach Beendigung der Zugabe der Mischung aus (a3) und dem gegebenenfalls vorhandenen Rest der Monomeren (a1) und (a2) sowie gegebenenfalls (a4), (a5) und (a6) wird so lange weiter polymerisiert, bis alle eingesetzten Monomeren im wesentlichen vollständig umgesetzt worden sind. Hierbei kann sich die zweite Stufe unmittelbar der ersten anschließen. Indes kann mit der zweiten Stufe erst nach einer gewissen Zeit, beispielsweise nach 10 min bis 10 Stunden, begonnen werden.

Die Menge und Zugabegeschwindigkeit des Initiators wird vorzugsweise so gewählt, daß ein Acrylatcopolymerisat (A1) mit einem zahlenmittleren Molekulargewicht Mn von 1000 bis 30.000 Dalton erhalten wird. Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Acrylatcopolymerisate (A1) bei einem nicht allzu hohen Polymerisationsfestkörper, bevorzugt bei einem Polymerisationsfestkörper von 80 bis 50 Gew.-%, bezogen auf die Monomeren, polymerisiert und anschließend die Lösemittel teilweise destillativ entfernt, so daß die entstehenden Acrylatcopolymerisatlösungen (A) einen Festkörpergehalt von bevorzugt 100 bis 60 Gew.-% aufweisen.

Für die Verwendung in dem erfindungsgemäßen Beschichtungsstoff wird der Festkörpergehalt der Acrylatcopolymerisatlösungen (A) mit mindestens einem aromatenfreien Lösemittel auf 5 bis 60, vorzugsweise 5 bis 40 Gew.-% und insbesondere 10 bis 30 Gew.-%, jeweils bezogen auf die Lösung (A), eingestellt.

Beispiel geeigneter Lösemittel sind Ethoxyethylpropionat und Butylglykol.

Die Herstellung der erfindungsgemäß zu verwendenden Acrylatcopolymerisate (A1) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter Copolymerisationsverfahren werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Beispiele geeigneter Reaktoren sind Rührkessel, Rührkesselkaskaden, Schlaufenreaktoren oder Taylorreaktoren.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \, \nu^{-1} (d/r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Der Anteil des Bestandteils (A) an dem erfindungsgemäßen Beschichtungsstoff kann sehr breit variieren und richtet sich vor allem danach, was für eine Flexibilität der hieraus hergestellte erfindungsgemäße Sol-Gel-Überzug aufweisen soll. Der Anteil ist nach oben begrenzt; so darf er nicht so hoch gewählt werden, daß es in dem erfindungsgemäßen Beschichtungsstoff zu einer Phasentrennung kommt oder die Härte und die Kratzfesigkeit des Sol-Gel-Überzugs zu stark abnimmt. Der Fachmann kann daher den jeweils optimalen Anteil aufgrund seines Fachwissens gegebenenfalls unter Zuhilfenahme einfacher Vorversuche bestimmen.

Der weitere wesentliche Bestandteil des erfindungsgemäßen Beschichtungsstoffs ist das Sol (B), welches durch Hydrolyse, Kondensation und Komplexierung der nachstehend beschriebenen Ausgangsverbindungen (B1), (B2) und (B3) hergestellt wird. Das Sol (B) ist vorzugsweise im vorstehend genannten Sinne aromatenfrei.

Bei der Ausgangsverbindung (B1) handelt es sich um mindestens eine hydrolysierbare Metallverbindung der allgemeinen Formel I

$$MR_n \qquad (I),$$

worin die Reste R gleich oder verschieden sein können und aus hydrolysierbaren Gruppen, Hydroxygruppen und nicht hydrolysierbaren Gruppen ausgewählt sind.

In der allgemeinen Formel I steht die Variable M für Aluminium, Titan oder Zirkonium, insbesondere aber Aluminium. Dementsprechend steht der Index n für 3 oder 4.

Die nicht hydrolysierbaren Gruppen R in der allgemeinen Formel I werden vorzugsweise ausgewählt aus Alkylgruppen, insbesondere mit 1 bis 4 C-Atomen, wie z.B. Methyl-, Ethyl-, Propyl- und Butylgruppen; Alkenylgruppen, insbesondere mit 2 bis 4 C-Atomen, wie z.B. Vinyl-, 1-Propenyl-, 2-Propenyl- und Butenylgruppen; Alkinylgruppen, insbesondere mit 2 bis 4 C-Atomen wie Acetylenyl- und Propargylgruppen; und Arylgruppen, insbesondere mit 6 bis 10 C-Atomen, wie z.B. Phenyl- und Naphthylgrupppen. Als nicht hydrolysierbare Gruppen R werden bevorzugt Alkylgruppen eingesetzt.

Die nicht hydrolysierbaren Gruppen R können mindestens eine funktionelle Gruppe enthalten. Bei diesen funktionellen Gruppen kann es sich beispielsweise um Epoxidgruppen, Aminogruppen, olefinisch ungesättigte Gruppen wie Vinyl- oder (Meth)acrylgruppen, Mercaptogruppen, Isocyanatgrupppen und/oder deren Umsetzungsprodukte mit weiteren reaktiven Verbindungen handeln.

Beispiele für hydrolysierbare Gruppen R in der vorstehend genannten Formel I sind Wasserstoffatome; Alkoxygruppen, insbesondere mit 1 bis 20 C-Atomen, wie z.B. Methoxy-, Ethoxy-, n-Propoxy-, i-Propoxy, n-Butoxy-, tert.-Butoxy- und sec.-Butoxygruppen; alkoxysubstituierte Alkoxygruppen, wie z.B. beta-Methoxyethoxygruppen; Acyloxygruppen, insbesondere mit 1 bis 4 C-Atomen wie z.B. Acetoxy- und Propionyloxygruppen; und Alkylcarbonylgruppen wie z.B. Acetylgruppen.

Besonders bevorzugte hydrolysierbare Gruppen R sind solche, die keinen Substituenten tragen und zu aromatenfreien Hydrolyseprodukten mit niedrigem Molekulargewicht, wie z.B. niederen Alkoholen, wie Methanol, Ethanol, Propanol, n-Butanol, i-Butanol, sec.-Butanol und tert.-Butanol führen.

Erfindungsgemäß ist es hierbei von Vorteil, wenn im Falle von Aluminium mindestens zwei, insbesondere drei, und im Falle von Titan oder Zirkonium drei, insbesondere vier, hydrolysierbare Gruppen vorhanden sind.

Erfindungsgemäß sind die vorstehend beschriebenen Alkoxygruppen besonders vorteilhaft und werden deshalb bevorzugt verwendet. Ganz besonders bevorzugt werden sec.-Butyloxygruppen verwendet. Ein Beispiel für eine ganz besonders bevorzugt verwendete hydrolysierbare Metallverbindung (B1) ist demnach Aluminiumtri-sec.-butylat.

Bei der Ausgangsverbindung (B2) handelt es sich um mindestens ein hydrolysierbares Silan der allgemeinen Formel II

$$Si(R^1)_2(R^2)_2 \qquad (II),$$

In der allgemeinen Formel II steht die Variable $R^1$ für Alkyl- und/oder Cycloalkylreste, und die Variable $R^2$ steht unabhängig hiervon für Alkoxyund/oder Cycloalkoxyreste.

Beispiele geeigneter Reste $R^1$ sind Methyl-, Ethyl-, Propyl- Isopropyl-, n-Butyl-, sec.-Butyl-, tert.-Butyl-, Pentyl-, Hexyl-, Cyclopropyl-, Cyclobutyl-, Cyclopentylund/oder Cyclohexylreste, insbesondere Methyl-, Ethyl- und/oder Propylreste.

Beispiele geeigneter Reste $R^2$ sind Methoxy-, Ethoxy-, Propoxy-, Isopropoxy-, n-Butoxy-, sec.-Butoxy-, tert.-Butoxy-, Pentyloxy-, Hexyloxy-, Cyclopropyloxy-, Cyclobutyloxy-, Cyclopentyloxy- und/oder Cyclohexyloxyreste, insbesondere Methoxy-, Ethoxy- und/oder Propoxyreste.

Beispiele gut geeigneter erfindungsgemäß zu verwendender Silane (B2) sind demnach Dimethyl-, Diethyl-, Dipropyl-, Methylethyl-, Methylpropyl- und Ethylpropyldimethoxysilan, Dimethyl-, Diethyl-, Dipropyl-, Methylethyl-, Methylpropyl- und Ethylpropyldiethoxysilan, Dimethyl-, Diethyl-, Dipropyl-, Methylethyl-, Methylpropyl- und Ethylpropyldipropoxysilan, Dimethyl-, Diethyl-, Dipropyl-, Methylethyl-, Methylpropyl- und Ethylpropylmethoxyethoxysilan, Dimethyl-, Diethyl-, Dipropyl-, Methylethyl-, Methylpropyl und Ethylpropylmethoxypropoxysilan sowie Dimethyl-, Diethyl-, Dipropyl-, Methylethyl-, Methylpropyl und Ethylpropylethoxypropoxysilan, von denen Dimethyldimethoxysilan und Dimethyldiethoxysilan, insbesondere Dimethyldiethoxysilan, besonders gut geeignet sind.

Bei der Ausgangsverbindung (B3) handelt es sich um hydrolysierbares Silan der allgemeinen Formel I.

$$SiR_4 \qquad (III),$$

In der allgemeinen Formel III hat die Variable R die gleiche Bedeutung wie vorstehend bei der allgemeinen Formel I angegeben.

Wenigstens eine Gruppe R der Formel I muß eine hydrolysierbare Gruppe sein. Silane (B3) mit zwei, vorzugsweise vier und insbesondere drei hydrolysierbaren Gruppen R sind besonders bevorzugt.

Für das erfindungsgemäß zu verwendende Sol (B) ist es wesentlich, daß es sich bei dem Silan (B3) nicht um ein Silan (B2) gemäß der allgemeinen Formel II handelt.

Beispiele gut geeigneter Silane (B3) sind Methyltriethoxysilan, Methyltrimethoxysilan, 3-Glycidyloxypropyltrimethoxysilan (GLYMO) oder Glycidyloxypropyltriethoxysilan (GLYEO), insbesondere Methyltriethoxysilan und GLYMO.

Die Gewichtsverhältnisse und die Molverhältnisse (B1) : (B2) : (B3) der Ausgangsprodukte können sehr breit variieren, was ein weiterer besonderer Vorteil des erfindungsgemäß zu verwendenden Sols (B) ist.

So kann beispielsweise das Molverhältnis von Silan (B2) zum Silan (B3) sehr breit variieren. Erfindungsgemäß ist es von Vorteil, wenn das Molverhältnis (B2) : (B3) bei 1 : 10 bis 1 : 1 und insbesondere 1 : 6 bis 1 : 2 liegt.

Das atomare Verhältnis von Metall M zu Silizium kann im Sol (B) ebenfalls sehr breit variieren und richtet sich vor allem danach, welche Kratzfestigkeit in den erfindungsgemäßen Sol-Gel-Überzügen eingestellt werden soll. Im allgemeinen wird durch den Ersatz eines Teils des Siliziums durch insbesondere Aluminium die Kratzfestigkeit und die Härte der erfindungsgemäßen Sol-Gel-Überzüge erhöht. Insbesondere liegt das molare Verhältnis M : Si bei 1 : 10 bis 1 : 1,5, vorzugsweise 1 : 6 bis 1 : 3.

Erfindungsgemäß werden Hydrolyse und Kondensation der vorstehend beschriebenen Silane (B2) und (B3) sowie der Metallverbindungen (B1) in der Gegenwart mindestens einer organischen, vorzugsweise nichtaromatischen Verbindung durchgeführt, welche Chelatliganden zu bilden vermag. Hierbei handelt es sich um organische Verbindungen mit mindestens zwei funktionellen Gruppen, welche an Metallatome oder -ionen koordinieren können. Üblicherweise handelt es sich bei diesen funktionellen Gruppen um Elektronendonatoren, welche Elektronen an Metallatome oder -ionen als Elektronenakzeptoren abgeben. Erfindungsgemäß sind grundsätzlich alle organischen Verbindungen der genannten Art geeignet, solange sie nicht die Hydrolyse und Kondensation und/oder die Vernetzung zum fertigen Sol-Gel-Überzug nachteilig beeinflussen oder gar völlig verhindern. Beispiele geeigneter organischer Verbindungen sind Dimethylglyoxim oder Verbindungen, die Carbonylgruppen in 1,3-Stellung enthalten, wie Acetylaceton oder Acetessigsäureethylester. Ergänzend wird auf Römpp Chemie Lexikon, Georg Thieme Verlag, Stuttgart, 1989, Band 1, Seite 634, verwiesen.

Methodisch gesehen weisen die Hydrolyse, Kondensation und Komplexierung, keine Besonderheiten auf, sondern erfolgen unter den Bedingungen, wie sie üblicherweise bei Sol-Gel-Prozessen angewandt werden, wie beispielsweise die nachstehend beschriebene Herstellung des Stammlacks (C). Für das erfindungsgemäß zu verwendende Sol (C) ist es dabei von Vorteil, wenn etwas niedrigere Temperaturen angewandt werden.

Vorzugsweise werden hierbei die Silane (B2) und (B3) sowie die Metallverbindungen (B1) und die organischen Verbindungen, welche Chelate zu bilden vermögen, vorgelegt, wonach dem Gemisch, vorzugsweise bei tieferen Temperaturen, insbesondere 0°C, Wasser und mindestens einer der nachstehend bei der Herstellung des Stammlacks (C) beschriebenen Kondensationskatalysatoren, insbesondere Salzsäure und/oder Essigsäure, zugegeben werden.

Besonders bevorzugt werden die Silane (B2) und ein Teil der Silane (B3) sowie die Metallverbindungen (B1) vorgelegt, wonach dem Gemisch, vorzugsweise bei tieferen Temperaturen, insbesondere 0 bis 40°C, sukzessive die organischen Verbindungen, welche Chelate zu bilden vermögen, der Rest der Silane (B3), Wasser und mindestens einer der nachstehend beschriebenen Kondensationskatalysatoren, insbesondere Salzsäure und/oder Essigsäure, zudosiert werden.

Die Reaktion kann in Gegenwart der nachstehend bei der Herstellung des Stammlacks (C) beschriebenen Lösemittel und/oder Nanopartikel durchgeführt werden. Erfindungsgemäß ist es indes von Vorteil, sie in Abwesenheit dieser Komponenten durchzuführen. Da das resultierende Sol (B) sehr reaktiv ist, empfiehlt es sich, es bis zu seiner weiteren Verwendung bei Temperaturen unterhalb 0 °C aufzubewahren.

Der Festkörpergehalt des Sols (B) kann sehr breit variieren. Vorteilhafterweise liegt der bei 50 bis 60, bevorzugt 10 bis 50 und insbesondere 20 bis 40 Gew.-%, jeweils bezogen auf die Gesamtmenge des Sols (B).

Auch der Anteil des Sols (B) an dem erfindungsgemäßen Beschichtungsstoffkann sehr breit variieren und richtet sich vor allem danach, wie das Eigenschaftsprofil hinsichtlich der Kratzfestigkeit und Härte einerseits und der Flexibilität andererseits der hieraus hergestellten erfindungsgemäßen Sol-Gel-Überzuge ausbalanciert werden soll. Der Anteil ist auch hier nach oben begrenzt; so darf er nicht so hoch gewählt werden, daß es in dem erfindungsgemäßen Beschichtungsstoff zu einer Phasentrennung kommt und/oder daß die hiermit hergestellten erfindungsgemäßen Sol-Gel-Überzuge zu hart und spröde werden. Der Fachmann kann daher den jeweils optimalen Anteil aufgrund seines Fachwissens gegebenenfalls unter Zuhilfenahme einfacher Vorversuche bestimmen.

Besonders vorteilhafte erfindungsgemäße Beschichtungsstoffe enthalten, jeweils bezogen auf ihre Gesamtmenge, 1 bis 30, vorzugsweise 2 bis 20 und insbesondere 3 bis 15 Gew.-% der Acrylatcopolymerisatlösung (A) und 5 bis 50, vorzugsweise 10 bis 40 und insbesondere 15 bis 30 Gew.-% des Sols (B) sowie bis zu 94 Gew.-% mindestens eines geeigneten zusätzlichen Bestandteils.

Beispiele geeigneter zusätzlicher Bestandteile sind sogenannte Stammlacke (C). Auch sie sind vorzugsweise frei von aromatischen Lösemitteln.

Sie werden hergestellt durch kontrollierte Hydrolyse und Kondensation mindestens eines der vorstehend beschriebenen organisch modifizierten hydrolysierbaren Silane (B3) oder mindestens eines der vorstehend beschriebenen organisch modifizierten hydrolysierbaren Silane (B2) oder Gemischen hiervon. Erfindungsgemäß ist es von Vorteil mindestens zwei Silane (B3) zu verwenden.

Die Silane (B3) und/oder (B2) können ganz oder teilweise in Form von Vorkondensaten eingesetzt werden, d.h. Verbindungen, die durch teilweise Hydrolyse der Silane (B3) und/oder (B2), entweder allein oder im Gemisch mit anderen hydrolysierbaren Verbindungen entstanden sind.

Die Hydrolyse und Kondensation kann gegebenenfalls in Anwesenheit von organischen Monomeren, von Lösemitteln, vorzugsweise aromatenfreier Lösemittel, der vorstehend beschriebenen organisch modifizierten hydrolysierbaren Metallalkoxide (B1) sowie von Metalloxiden in Form von Nanopartikeln durchgeführt werden. Diese Nanopartikel sind < 50 nm. Es kann sich beispielsweise um $Al_2O_3$, $ZrO_2$ und/oder $TiO_2$ handeln.

Zur Hydrolyse und Kondensation werden die Silane (B3) und/oder (B2) im gewünschten Mischungsverhältnis mit Wasser vorkondensiert. Die Wassermenge wird so zudosiert, daß lokale Überkonzentrationen vermieden werden. Dies gelingt z.B. durch Eintragen der Wassermenge in das Reaktionsgemisch mit Hilfe von feuchtigkeitsbeladenen Adsorbentien, z.B. Kieselgel oder Molekularsieben, wasserhaltigen organischen Lösungsmitteln, z.B. 80%igem Ethanol, oder Salzhydraten, z.B. $CaCl_2$ x $6H_2O$. Vorzugsweise erfolgt die Vorkondensation in Gegenwart eines Hydrolyse- und Kondensationskatalysators jedoch in Abwesenheit eines organischen Lösungsmittels.

In einer weiteren Variante wird die Hydrolyse und Kondensation der hydrolysierbaren Silane (B3) und/oder (B2) in der Gegenwart eines aromatenfreien organischen Lösemittels, wie ein aliphatischer Alkohol, wie Methanol, Ethanol, Propanol, Isopropanol oder Butanol, ein Ether wie Dimethoxiethan, ein Ester wie Dimethylglycolacetat oder Methoxypropylacetat und/oder 2-Ethoxyethanol oder ein Keton wie Aceton oder Methylethylketon, durchgeführt.

Als Hydrolyse- und Kondensationskatalysatoren eignen sich protonen- oder hydroxylionenabspaltende Verbindungen und Amine. Spezielle Beispiele sind organisch oder anorganische Säuren, wie Salzsäure, Schwefelsäure, Phosphorsäure, Ameisensäure oder Essigsäure sowie organische oder anorganische Basen wie Ammoniak, Alkali- oder Erdalkalimetallhydroxide, z.B. Natrium, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure, Essigsäure, Ammoniak oder Triethylamin besonders bevorzugt.

Die Vorkondensation wird bei Temperaturen von 0 bis 100 °C und vorzugsweise 20 bis 95 °C durchgeführt. Vorteilhafterweise wird die Mischung der Ausgangsprodukte zunächst auf Temperaturen von 40 bis 80 °C, insbesondere 50 bis 70 °C, erhitzt und eine gewisse Zeit, insbesondere 0,5 bis 10 Stunden, bei diesen Temperaturen gehalten, wonach sie auf Temperaturen von 80 bis 100 °C, insbesondere 85 bis 95 °C, erhitzt wird. Hiernach kann ein Teil der resultierenden Reaktionsmischung azeotrop abdestilliert werden.

Die Vorkondensation wird so weit geführt, daß der resultierende Stammlack (B) noch flüssige Konsistenz hat.

Sofern verwendet, kann der Anteil des Stammlacks (C) an dem erfindungsgemäßen Beschichtungsstoff sehr breit variieren. Er bietet somit eine zusätzliche vorteilhafte Variationsmöglichkeit für das Eigenschaftsprofil des erfindungsgemäßen Beschichtungsstoffs. Sein Anteil richtet sich vor allem danach, was für eine Kratzfestigkeit und Härte der hieraus hergestellte erfindungsgemäße Sol-Gel-Überzug aufweisen soll. Der Anteil ist nach oben begrenzt; so darf er nicht so hoch gewählt werden, daß es in dem erfindungsgemäßen Beschichtungsstoff zu einer Phasentrennung kommt und/oder daß die hiermit hergestellten erfindungsgemäßen Sol-Gel-Überzüge zu hart und spröde werden. Im allgemeinen sollen daher 40 Gew.-%, bezogen auf die Gesamtmenge des Beschichtungsstoffs, an Stammlack (C) nicht überschritten werden. Der Fachmann kann daher den jeweils optimalen Anteil aufgrund seines Fachwissens gegebenenfalls unter Zuhilfenahme einfacher Vorversuche bestimmen.

Ein weiteres Beispiel für einen geeigneten zusätzlichen Bestandteil ist die sogenannte Additivlösung (D). Sie ist vorzugsweise aromatenfrei.

Die Additivlösung (D) enthält mindestens eine ethylenisch ungesättigte Verbindung (d1), welche mindestens eine Epoxidgruppe aufweist. Ein Beispiel einer geeigneten Verbindung (d1) ist Glycidyl(meth)acrylat.

Des weiteren enthält sie als Komponente (d2) mindestens ein Silan (B3) mit mindestens einer nicht hydrolysierbaren Gruppe R, welche mindestens eine Epoxidgruppe aufweist. Ein Beispiel einer geeigneten Verbindung (d2) ist 3-Glycidyloxypropyltrimethoxysilan (GLYMO).

Nicht zuletzt enthält sie mindestens ein Addukt (d3) mindestens eines Silans (B3) mit mindestens einer nicht hydrolysierbaren Gruppe R, welche mindestens eine Aminogruppe aufweist, und mindestens einem cyclischen ethylenisch ungesättigten Dicarbonsäureanhydrid. Ein Beispiel für ein geeignetes Silan (B1) ist 3-Aminopropyltriethoxysilan. Beispiele für geeignete Dicarbonsäureanhydride sind Maleinsäureanhydrid und Itaconsäureanhydrid.

In der Additivlösung sind die Komponenten (d1), (d2) und (d3) in einem Gewichtsverhältnis von (1 bis 10) : (1 bis 30) : 1, insbesondere (2 bis 6) : (10 bis 20) : 1 enthalten. Vorzugsweise liegt der Festkörpergehalt der Additivlösung (D) unter 80 Gew.-%, vorzugsweise unter 60 Gew.-% und insbesondere unter 50 Gew.-%.

Sofern sie mit verwendet wird, kann der Anteil der Additivlösung (D) an dem erfindungsgemäßen Beschichtungsstoff breit variieren. Der Fachmann kann den jeweils optimalen Anteil aufgrund seines Fachwissens gegebenenfalls unter Zuhilfenahme einfacher Vorversuche bestimmen.

Weitere Beispiele für geeignete zusätzliche Bestandteile sind Lösemittel (E), vorzugsweise aromatenfreie Lösemittel (E). Sie sind in dem erfindungsgemäßen Beschichtungsstoff insbesondere dann in größeren Mengen enthalten, wenn besonders dünne erfindungsgemäße Sol-Gel-Überzüge, vorzugsweise mit einer Trockenfilm-Schichtdicke <5 μm, hergestellt werden sollen. Hierbei kann der Gehalt des erfindungsgemäßen Beschichtungsstoffs an geeignetem Lösemittel (E), jeweils bezogen auf den Beschichtungsstoff, bis zu 94, bevorzugt bis zu 90, besonders bevorzugt bis zu 80 und insbesondere bis zu 70 Gew.-% betragen. Beispiele geeigneter Lösemittel (E) sind die vorstehend genannten niederen Alkohole, insbesondere Ethanol, oder Glykolether wie Ethylglykol oder Butylglykol, von denen Ethanol ganz besonders bevorzugt verwendet wird.

Weitere Beispiele für geeignete zusätzliche Bestandteile sind übliche und bekannte Lackadditive (F). Gut geeignet sind alle Lackadditive (F), welche das Eigenschaftsprofil der erfindungsgemäßen Sol-Gel-Überzüge, insbesondere deren optische Eigenschaften (Appearance) und Kratzfestigkeit, nicht nachteilig beeinflussen, sondern in vorteilhafter Weise variieren und verbessern.

Beispiele besonders gut geeigneter Lackdditive (F) sind

- UV-Absorber;

- Radikalfänger;

- Katalysatoren für die Vernetzung;

- Slipadditive;

- Polymerisationsinhibitoren;

- Entschäumer;

- Antikochermittel, bei denen der gezielte Einsatz kleinerer Mengen aromatischer Lösemittel von Nutzen sein kann;

- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfonsäuren von alkoxylierten Alkanolen, Polyolen, Phenolen und Alkylphenolen;

- Netzmittel wie Siloxane, fluorhaltige Verbindungen, Carbonsäurehalbester, Phosphorsäureester, Polyacrylsäuren und deren Copolymere oder Polurethane;

- Haftvermittler;

- Verlaufmittel;

- filmbildende Hilfsmittel wie Cellulose-Derivate;

- Flammschutzmittel oder

- rheologiesteuernde Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate.

Weitere Beispiele geeigneter Additive (F) werden in dem Lehrbuch "Lackadditive" von Johan Bieleman, Wiley-VCH, Weinheim, New York, 1998, beschrieben.

Der erfindungsgemäße Beschichtungsstoff weist einen Festkörpergehalt von bis zu 80, vorzugsweise bis zu 60, besonders bevorzugt bis zu 40 und insbesondere bis zu 20 Gew.-% auf. Sollen besonders dünne erfindungsgemäße Sol-Gel-Überzüge, d.h. Überzüge einer Stärke < 5 μm hergestellt werden, empfiehlt es sich, einen Festkörpergehalt von weniger als 20 Gew.-% zu wählen. Ganz besonders bevorzugt werden hierbei Festkörpergehalte von 5 bis 15 und insbesondere 7 bis 12 Gew.-% angewandt.

Die Herstellung des erfindungsgemäßen Beschichtungsstoffs weist keine Besonderheiten auf, sondern erfolgt in üblicher und bekannter Weise durch Vermischen seiner wesentlichen Bestandteile (A) und (B) sowie gegebenenfalls mindestens eines geeigneten zusätzlichen Bestandteils (C), (D), (E) und/oder (F) in üblichen und bekannten Mischaggregaten wie Dissolvern. Die Bestandteile können hierbei in beliebiger Weise miteinander vermischt werden. Beispielsweise können sie auf einmal in das Mischaggregat eingefüllt und miteinander vermischt werden. Oder aber das Sol (B) wird vorgelegt und dann werden die übrigen Bestandteile nacheinander einzelnen zugeben. Hierbei hat es sich bewährt, den Stammlack (B) - sofern verwendet - vor der Acrylatcopolymerisatlösung (A) zuzusetzen. Wird ein Lösemittel (E) verwendet, wird es vorteilhafterweise nach der Zugabe des Stammlacks (B) - sofern verwendet - und vor der Zugabe des Bestandteils (A) und ggf. (D) zugesetzt. Werden Lackadditive (F) verwendet, werden sie vorteilhafterweise nach der Zugabe des Stammlacks (B) - sofern verwendet - und vor der Zugabe des Bestandteils (A) hinzugegeben. Werden Lösemittel (E) und Lackadditive (F) verwendet, werden die Lackadditive (F) vorzugsweise vor der Zugabe der Lösemittel (E) zugesetzt.

Die erfindungsgemäßen Beschichtungsstoffe sind hervorragend für die Herstellung der erfindungsgemäßen Sol-Gel-Überzüge, insbesondere Sol-Gel-Klarlacke, geeignet.

Erfindungsgemäß kann mit ihnen jedes denkbare Substrat beschichtet werden. Beispielhaft seien Substrate aus Metall, Kunststoff, Glas, Holz oder Keramik genannt. Diese Substrate können mit einer Grundierung versehen sein. Im Falle von Kunststoff kann es sich um eine sogenannte Hydro-Grundierung handeln. Im Falle von Metall kann das Substrat auch einer Oberflächenbehandlung, beispielsweise einer Galvanisierung oder einer Phosphatierung oder Eloxierung, unterzogen worden sein. Des weiteren kann auf dem Metallsubstrat ein Elektrotauchlack und ein Füller als Grundierung vorhanden sein.

Die Applikation der erfindungsgemäßen Beschichtungsstoffe weist keine methodischen Besonderheiten auf, sondern es können die üblichen Applikationsmethoden wie Spritzen, Rakeln, Streichen, Gießen, Tauchen, Tränken, Träufeln oder Walzen angewandt werden. Dabei können die Substrate ebenso wie die Applikationseinrichtungen bewegt werden oder ruhen.

Nach ihrer Applikation werden die erfindungsggemäßen Beschichtungsstoffe gehärtet, wodurch die erfindungsgemäßen Sol-Gel-Überzüge resultieren. Vor der Härtung kann gegebenenfalls noch eine Vortrocknung erfolgen. Auch hierfür können die üblichen und bekannten Verfahren und Vorrichtungen wie Umluftöfen angewandt werden. Erfindungsgemäß ist es indes von Vorteil, die erfindungsgemäßen Beschichtungsstoffe mit mittlerer IR-Strahlung zu härten. Hierdurch wird es möglich, nur Teile von Substraten oder ein- oder mehrschichtigen Lackierungen an beschädigten oder an besonders exponierten Stellen gezielt zu beschichten und kratzfest auszurüsten, ohne daß dabei die übrigen Teile durch thermische Belastung in Mitleidenschaft gezogen werden. Dies macht die Verwendung der erfindungsgemäßen Beschichtungsstoffe in der Autoreparaturlackierung möglich. Da hierbei außerdem die Menge des erfindungsgemäßen Beschichtungsstoffs auf ein Minimum beschränkt werden kann, ist seine Verwendung auch besonders wirtschaftlich.

Die erfindungsgemäßen Beschichtungsstoffe können direkt auf die Substrate appliziert werden, um hierauf nach dem Aushärten einen kratzfesten erfindungsgemäßen Sol-Gel-Überzug zu bilden. In dieser Weise können Substrate, wie sie üblicherweise für die Herstellung von Fahrzeugen verwendet werden, von sonstigen Bauteilen und Gerätschaften, wie Radiatoren, Coils oder Container, oder von Möbeln kratzfest ausgerüstet werden.

Die besonderen Vorteile der erfindungsgemäßen Beschichtungsstoffe treten indes besonders offen zutage, wenn sie für die Beschichtung von einschichtigen oder mehrschichtigen Lackierungen mit den erfindungsgemäßen Sol-Gel-Überzügen verwendet werden. Hierbei erweist es sich als besonders vorteilhaft, daß die einschichtigen oder mehrschichtigen Lackierungen vollständig ausgehärtet sein können.

Demgemäß eignen sich die erfindungsgemäßen Beschichtungsstoffe für die Beschichtung einschichtiger oder mehrschichtiger Lackierungen, wie sie auf den Gebieten der Automobilerstlackierung, der Autoreparaturlackierung, der industriellen Lackierung, inklusive Coil Coating und Container Coating, der Kunststofflackierung und der Möbellackierung üblich und bekannt sind.

Beispiele einschichtiger Lackierungen dieser Art sind die von der Automobilerstlackierung her bekannten Uni-Decklacke, welche Bindemittel, Vernetzungsmittel und effekt- und/oder farbgebende Pigmente enthalten.

Beispiele für mehrschichtige Lackierungen sind die Lackierungen, welche einen effekt-und/oder farbgebenden Basislack, insbesondere einen Wasserbasislack, und einen Klarlack enthalten und im Rahmen der Automobilerstlackierung nach dem Naß-in-naß-Verfahren, wie es beispielsweise in den Patentschriften US-A-3,639,147, DE-A-3 3 33 072, DE-A-38 14 853, GB-A-2 012 191, US-A-3,953,644, EP-A-0 260 447, DE-A-39 03 804, EP-A-0 320 552, DE-A-36 28 124, US-A-4,719,132, EP-A-0 297 576, EP-A-0 069 936, EP-A-0 089 497, EP-A-0 195 931, EP-A-0 228 003, EP-A-0 038 127 und DE-A-28 18 100 beschrieben wird, oder im Rahmen der Autoreparaturlackierung erzeugt werden. Die erfindungsgemäßen Beschichtungsstoffe sind insbesondere für Beschichtung von mehrschichtigen Lackierungen dieser Art besonders hervorragend geeignet.

Beispiele geeigneter Wasserbasislacke sowie der entsprechenden mehrschichtigen Lackierungen sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 bekannt.

Beispiele geeigneter Einkomponenten(1K)-, Zweikomponenten(2K)- oder Mehrkomponenten(3K, 4K)-Klarlacke sind beispielsweise aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamatund/oder Allophanatgruppen und gegebenenfalls carbamat- und/oder allophanatmodifizerten Aminoplastharzen als Vernetzungsmittel.

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Sie enthalten bekanntermaßen mit aktinischem Licht und/oder Elektronenstrahlung härtbare niedermolekulare, oligomere und/oder polymere Verbindungen, vorzugsweise strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel eingesetzt, die frei von aromatischen Struktureinheiten sind.

Es können indes auch mehrschichtige Klarlackschichten angewandt werden wie etwa eine Klarlackschicht auf der Basis von hydroxylgruppenhaltigen Bindemitteln und blockierten Polyisocyanaten und Aminoplasten als Vernetzungsmittel, die der Wasserbasislackschicht unmittelbar aufliegt und über der sich eine weitere Klarlackschicht auf der Basis von carbamat- und/oder allophanatgruppenhaltigen Bindemitteln und Aminoplasten als Vernetzungsmittel befindet.

In erfindungsgemäßer Verfahrensweise werden die ein- oder mehrschichtigen Lackierungen, insbesondere die Klarlacke, vor der Applikation des erfindungsgemäßen Beschichtungsstoffs ausgehärtet. Dies stellt einen weiteren besonderen Vorteil des erfindungsgemäßen Beschichtungsstoffs und des Verfahrens dar, weil die üblicherweise im Betrieb angewandten Lackierverfahrenund -vorrichtungen nicht abgewandelt werden müssen; nach der Durchführung eines üblichen und bekannten Verfahrens muß - im wesentlichen unabhängig hiervon - lediglich ein weiterer Lakkierschritt ausgeführt werden.

Hierbei erweist es sich als weiterer besonderer Vorteil, daß im wesentlichen alle üblicherweise verwendeten Klarlackschichten mit dem erfindungsgemäßen Beschichtungsstoff beschichtet werden können.

Die erfindungsgemäßen Sol-Gel-Überzüge, welche aus den erfindungsgemäßen Beschichtungsstoffen vorzugsweise nach dem erfindungsgemäßen Verfahren hergestellt werden, zeichnen sich durch eine hervorragende Kratzfestigkeit bei sehr guter Haftung, auch nach der Belastung mit Schwitzwasser, aus. Auch die Appearance ist sehr gut. Das erfindungsgemäße Verfahren eignet sich daher insbesondere für die Lackierung von Fahrzeugkarosserien zur Erstlackierung und Reparaturlackierung, insbesondere von Automobilkarosserien, mit Mehrschichtlackierungen, die industrielle Lackierung, inklusive Coil Coatings und Container Coatings, die Kunststofflackierung und die Möbellackierung.

**Beispiele**

**Herstellbeispiel 1**

**Die Herstellung eines Acrylatcopolymerisats zur Modifikation des Sol-Gel-Klarlacks**

In einem geeigneten Rührkessel mit Rückflußkühler und Rühren wurden 39 Teile Ethoxyethylpropionat vorgelegt und auf 130 °C erhitzt. In einem ersten Monomerzulaufgefäß wurden 9,598 Teile Butylmethacrylat, 7,708 Teile Methylmethacrylat, 8,003 Teile Styrol, 4,253 Teile Methacrylester 13.0 (Methacrylsäureester mit einem langen Alkylrest im Esterteil) und 9,096 Teile Hydroxyethylacrylat vorgemischt. In einem zweiten Monomerzulaufgefäß wurden 3,810 Teile Hydroxyethylacrylat, 1,831 Teile Acrylsäure und 0,916 Teile Ethoxyethylpropionat vorgelegt. In einen Initiatorzulaufgefäß wurden 3,692 Teile Peroxid TBPEH (tert.-Butylperethylhexanoat) und 6,025 Teile Ethoxyethylpropionat vorgelegt. Der Inhalt des ersten Monomerzulaufgefäßes wurde während vier Stunden gleichmäßig in den Reaktor dosiert. Nach zwei Stunden und 30 Minuten nach dem Beginn des ersten Monomerzulaufs wurde mit dem zweiten Monomerzulauf begonnen. Zu diesem Zweck wurde der Inhalt des zweiten Monomerzulaufgefäßes während einer Stunde und 30 Minuten gleichmäßig in den Reaktor dosiert. Der Inhalt des Initiatorzulaufgefäßes wurde während vier Stunden und 30 Minuten gleichmäßig in den Reaktor dosiert, wobei mit dem Initiatorzulauf fünf Minuten vor dem ersten Monomerzulauf begonnen wurde. Nach dem Zuläufen wurde die resultierende Reaktionsmischung während zwei Stunden bei 130 °C polymerisiert bis ein Originalviskosität von 2,2 dPas, ein Festkörpergehalt von 50 Gew.-% (15 Minuten/180 °C) und eine Säurezahlen von 30 mg KOH/g erreicht waren. Hiernach wurde das Ethoxyethylpropionat im Vakuum bei 100 °C abdestilliert, bis ein Festkörpergehalt von 81 Gew.-% erreicht war. Die resultierende Reaktionsmischung wurde auf 80 °C abgekühlt und mit Butylglykol und Ethoxyethylpropionat (Gewichtsverhältnis 5 : 1) auf einen Festkörpergehalt von 75 Gew.-% eingestellt.

Für die Herstellung des erfindungsgemäßen Sol-Gel-Klarlacks wurde die Lösung des Acrylatcopolymerisats mit Butylglykol auf einen Festkörpergehalt von 20 Gew.-% eingestellt, und es resultierte die Lösung zur organischen Modifikation.

**Herstellbeispiel 2**

**Die Herstellung des erfindungsgemäß zu verwendenden Sols 1**

In einem geeigneten Reaktionsgefäß wurde eine Mischung aus 49,8 Teilen Aluminium-tri-sec-butylat, 71,2 Teilen Methyltriethoxysilan und 29,6 Teilen Dimethyldiethoxysilan bei 25 °C vorgelegt. Zu der Mischung wurden 19,6 Teile Acetessigsäureethylester derart zudosiert, daß die Temperatur des Reaktionsgemischs 25 °C nicht überschritt.

Nach der Zugabe wurde die Temperatur des Reaktionsgemischs auf 40 °C erhöht und während 30 Minuten bei dieser Temperatur gehalten. Danach wurde der Ansatz auf 25 °C abgekühlt, wonach 44 Teile Glycidyloxypropyltrimethoxysilan (GLYMO) zudosiert wurden. Hiernach wurde das Reaktionsgemisch auf 0 °C abgekühlt. Bei dieser Temperatur wurden während 2,5 Stunden 52,2 Teile 0,1 N Salzsäure zur Vorlage zudosiert. Nach der Zugabe wurde die resultierende Reaktionsmischung während 24 Stunden bei Raumtemperatur gealtert. Der experimentell ermittelte Festkörpergehalt betrug 34,9 Gew.-% (15 Minuten/180 °C). Die Viskosität (original; ermittelt mit einem Platte/Kegel-Viskosimeter) lag bei einem Schergefälle D = 103 s$^{-1}$ bei 5 mPas. Der pH-Wert lag bei 3,9. Bis zu seiner Verwendung zur Herstellung des erfindungsgemäßen Sol-Gel-Klarlacks wurde das Sol bei -18 °C gelagert.

**Herstellbeispiel 3**

**Die Herstellung des erfindungsgemäß zu verwendenden Sols 2**

In einem geeigneten Reaktionsgefäß wurde eine Mischung aus 49,8 Teilen Aluminium-tri-sec-butylat, 89 Teilen Methyltriethoxysilan und 14,8 Teilen Dimethyldiethoxysilan bei 25 °C vorgelegt. Zu der Mischung wurden 19,6 Teile Acetessigsäureethylester derart zudosiert, daß die Temperatur des Reaktionsgemischs 25 °C nicht überschritt. Nach der Zugabe wurde die Temperatur des Reaktionsgemischs auf 40 °C erhöht und während 30 Minuten bei dieser Temperatur gehalten. Danach wurde der Ansatz auf 25 °C abgekühlt, wonach 44 Teile Glycidyloxypropyltrimethoxysilan (GLYMO) zudosiert wurden.

Hiernach wurde das Reaktionsgemisch auf 0 °C abgekühlt. Bei dieser Temperatur wurden während 2,5 Stunden 52,2 Teile 0,1 N Salzsäure zur Vorlage zudosiert. Nach der Zugabe wurde die resultierende Reaktionsmischung während 24 Stunden bei Raumtemperatur gealtert. Der experimentell ermittelte Festkörpergehalt betrug 34,3 Gew.-% (15 Minuten/180 °C). Die Viskosität (original; ermittelt mit einem Platte/Kegel-Viskosimeter) lag bei einem Schergefälle D = 103 s$^{-1}$ bei 5 mPas. Der pH-Wert lag bei 3,8. Bis zu seiner Verwendung zur Herstellung des erfindungsgemäßen Sol-Gel-Klarlacks wurde das Sol bei -18 °C gelagert.

**Beispiel 1**

**Die Herstellung des erfindungsgemäßen Sol-Gel-Klarlacks 1**

Der Sol-Gel-Klarlack 1 wurde erhalten, indem man 58,6 Teile des Sols 1 gemäß Herstellbeispiel 2 vorlegte und hierzu nacheinander, 0,4 Teile BYK® 301 (handelsübliches Verlaufinittel der Firma Byk Chemie), 150 Teile Ethanol, 20 Teile der Lösung zur organischen Modifikation gemäß Herstellbeispiel 1, 0,43 Teile Tinuvin® 400 und 0,29 Teile Tinuvin® 123 (beides handelsübliche Lichtschutzmittel der Firma Ciba Specialty Chemicals, Inc.) unter Rühren hinzugab und die Bestandteile miteinander vermischte. Es resultierte der erfindungsgemäße Sol-Gel-Klarlack 1 mit einem Festkörpergehalt von 10,6 Gew.-%.

**Beispiel 2**

**Die Herstellung des erfindungsgemäßen Sol-Gel-Klarlacks 2**

Beispiel 1 wurde wiederholt, nur daß anstelle des Sols 1 gemäß Herstellbeispiel 2 59,8 Teile des Sols 2 gemäß Herstellbeispiel 3 verwendet wurden. Es resultierte der erfindungsgemäße Sol-Gel-Klarlack 2 mit einem Festkörpergehalt von 10,6 Gew.-%.

**Beispiel 3**

**Die Herstellung des erfindungsgemäßen Sol-Gel-Klarlacks 3**

Beispiel 1 wurde wiederholt, nur daß anstelle von 20 Teilen der Lösung zur organischen Modifikation gemäß Herstellbeispiel 1 30 Teile verwendet wurden. Es resultierte der erfindungsgemäße Sol-Gel-Klarlack 3 mit einem Festkörpergehalt von 11 Gew.-%.

**Beispiele 4 bis 6**

**Die Herstellung der erfindungsgemäßen Sol-Gel-Überzüge 1 bis 3 auf einer mehrschichtigen Lackierung**

**1. Die Herstellung der Prüftafeln der Beispiele 4 bis 6**

Für das Beispiel 4 wurde zur Herstellung des erfindungsgemäßen Sol-Gel-Überzugs 1 der erfindungsgemäße Sol-Gel-Klarlack 1 gemäß Beispiel 1 verwendet.

Für das Beispiel 5 wurde zur Herstellung des erfindungsgemäßen Sol-Gel-Überzugs 2 der erfindungsgemäße Sol-Gel-Klarlack 2 gemäß Beispiel 2 verwendet.

Für das Beispiel 6 wurde zur Herstellung des erfindungsgemäßen Sol-Gel-Überzugs 3 der erfindungsgemäße Sol-Gel-Klarlack 3 gemäß Beispiel 3 verwendet.

Die Prüftafeln der Beispiele 4 bis 6 mit den erfindungsgemäßen Sol-Gel-Überzügen 1 bis 3 wurden nach der folgenden allgemeinen Vorschrift hergestellt: Auf mit einem handelsüblichen Elektrotauchlack kathodisch beschichteten Stahltafeln (Elektrotauchlackierung mit einer Schichtdicke von 18 - 22 μm) wurde mit einer Becherpistole zunächst ein handelsüblicher Füller von BASF Coatings AG appliziert und eingebrannt. Es resultierte eine Füllerschicht mit einer Schichtdicke von 35 bis 40 μm. Anschließend wurde auf den Füller in gleicher Weise ein handelsüblicher schwarzer Unibasislack der Firma BASF Coatings AG appliziert und während 10 min bei 80 °C vorgetrocknet. Nach dem Kühlen der Tafeln wurde ein Schicht aus einem handelsüblichen Zweikomponenten(2K)-Klarlack (FF98-0015 der Firma BASF Coatings AG) aufgetragen und während 10 min bei 50 °C vorgetrocknet und anschließend während 45 min bei 140 °C zusammen mit dem Basislack vernetzt. Es resultierten eine Basislackschicht einer Stärke von 15 μm und eine Klarlackschicht einer Stärke von 44 μm. Der schwarze Unibasislack wurde gewählt, weil man an den entsprechenden Prüftafeln die Bildung von Kratzer am besten beobachten konnte.

Nach dem Abkühlen wurden die erfindungsgemäßen Sol-Gel-Klarlacke 1 bis 3 gemäß den Beispielen 1 bis 3 appliziert, so daß nach dem Aushärten mit mittlerer IR-Strahlung (Abstand des Strahlers von der Oberfläche 18 cm; Strahler: Modul Infrarotstrahler MMS 2000 der Firma Haraeus; Dauer: 5 min; Temperatur: 140°C, gemessen mit einem Thermofühler auf der Rückseite der Prüftafeln) die erfindungsgemäßen Sol-Gel-Überzuge 1 bis 3 einer Stärke von jeweils 4,5 μm resultierten.

**2. Die Prüfung der Eigenschaften der erfindungsgemäßen Sol-Gel-Überzuge 1 bis 3**

Für die Prüfung der anwendungstechnischen Eigenschaften der erfindungsgemäßen Sol-Gel-Überzüge 1 bis 3 wurden die vorstehend beschriebenen Prüftafeln verwendet.

**2.1 Die Haftung der Sol-Gel-Überzuge 1 bis 3**

Die Tabelle 1 gibt einen Überblick über die Giitterschnittests und die hierbei erhaltenen Ergebnisse.

Tabelle 1

| Haftfestigkeit des erfindungsgemäßen Sol-Gel-Überzugs | | | |
|---|---|---|---|
| **Testmethoden** | **Beispiele** | | |
| | **4** | **5** | **6** |
| Gitterschnitt nach DIN 53151 (2 mm) [Note 0 bis 5] | 0 | 0 | 0 |
| Gitterschnitt nach 240 Stunden Belastung mit SKK | 0 | 0 | 0 |
| und Regeneration von | | | |
| 1 Stunde | 0 | 0 | 0 |
| 3 Stunden | 0 | 0 | 0 |
| 6 Stunden | 0 | 0 | 0 |
| 24 Stunden | 0 | 0 | 0 |
| [Note 0 bis 5]: 0 = bester Wert; 5 = schlechtester Wert  SKK = Schwitzwasserkonstantklima nach DIN 50017 | | | |

Obwohl der Klarlack vor seiner Überschichtung mit den Sol-Gel-Klarlacken 1 bis 3 vollständig eingebrannt worden war, erfolgte keine Enthaftung des Sol-Gel-Überzüge 1 bis 3.

## 2.2 Die Kratzfestigkeit der Sol-Gel-Überzuge 1 bis 3 nach dem Bürstentest

Für diesen Test wurden die Prüftafeln nach Applikation der Lacke 2 Wochen bei Raumtemperatur gelagert, bevor die Prüfung durchgeführt wurde.

Die Kratzfestigkeit des Sol-Gel-Überzugs auf den Prüftafeln wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült und die Prüftafel mit Druckluft trockengeblasen.

Hierbei zeigte es sich, daß die erfindungsgemäßen Sol-Gel-Überzüge 1 bis 3 überhaupt nicht zerkratzt waren.

## 2.4 Die Kratzfestigkeit gegenüber Stahlwolle

Die Sol-Gel-Überzüge 1 bis 3 wurden 10 Doppelhüben mit Stahlwolle bei einem Auflagegewicht von 800 g ausgesetzt. Die Kratzfestigkeit wurde anhand der eingetretenen Beschädigung visuell beurteilt und benotet (Noten 1 bis 6: 1 = sehr gut; 2 = gut; 3 = befriedigend; 4 = ausreichend; 5 = mangelhaft; 6 = ungenügend).

Die Sol-Gel-Überzüge 1 und 2 erreichten beide die Note 1.

Der Sol-Gel-Überzug 3 erreichte die Note 1 bis 2.

Dies belegt erneut die außerordentlich hohe Kratzfestigkeit der erfindungsgemäßen Sol-Gel-Überzüge.

## 2.5 Die Gleitfähigkeit (Slip) der erfindungsgemäßen Sol-Gel-Überzuge 1 bis 3

Der Oberflächen-Slip wurde mit Hilfe des Slipmeßgeräts MOD 9505AE -SERIAL 7035-0689-2 der Firma ALTEK, P.O. Box 1128, Torrington, Connecticut 06790, USA, gemessen. Hierbei wurde mit einer konstanten Kraft ein mit drei Halbkugeln versehenes Gewicht über die Oberfläche der Prüftafeln gezogen. Der hierbei auftretende Reibungswiderstand wurde mit Hilfe eines x/y-Plotters als dimensionslose Größe graphisch dargestellt. Die Höhe des hierbei resultierenden Peaks ist ein relatives Maß für die Gleitfähigkeit der betreffenden Oberfläche: je geringer die Höhe, desto gleitfähiger die Oberfläche.

Bei diesem Test wies der Sol-Gel-Überzug 1 eine relative Peakhöhe von 0,045, der Sol-Gel-Überzug 2 eine solche von 0,113 und der Sol-Gel-Überzug 3 eine solche von 0,037 auf. Zum Vergleich wies der für die Herstellung der mehrschichtigen Lackierung verwendete handelsübliche Zweikomponenten(2K)-Klarlack (FF98-0015 der Firma BASF Coatings AG) eine relative Peakhöhe von 0,05 auf. Somit entsprach die Gleitfähigkeit der erfindungsgemäßen Sol-Gel-Überzüge derjenigen handelsüblicher Klarlacke bzw. übertraf diese sogar.

## 2.6 Die Chemikalienbeständigkeit nach dem MB-Gradientenofen-Test

Bei dem dem Fachmann gutbekannten MB-Gradientenofen-Test wurden die Prüftafeln der Beispiele 4 bis 6 definiert der Schädigung durch Schwefelsäure, Wasser, Pankreatin und Baumharz ausgesetzt. Hierzu wurden die Probesubstanzen im Abstand von je einer Segmentbreite (Einstellung des Gradienten auf 30 - 75°C [1°C pro Heizsegment]) aufgetragen. Nach einer Lagerung von 72 Stunden im Normklima 23°C wurden die Prüftafeln auf einem Gradientenofen (z.B. Typ: 2615 Fa. BYK-Gardner) während 30 min belastet. Ermittelt wurde die Temperatur, bei der die erste sichtbare Veränderung auftrat.

Die Versuchsergebnisse finden sich in der Tabelle 2.

Tabelle 2:

| Chemikalienbeständigkeit nach dem MB-Gradientenofen-Test | | | |
|---|---|---|---|
| Prüfsubstanz | 1. Markierung bei °C: | | |
| | Beispiele | | |
| | **4** | **5** | **6** |
| Schwefelsäure 1%-ig | 40 | 45 | 43 |
| Wasser dest. | > 75 | > 75 | > 75 |
| Pankreatin | 53 | 52 | 45 |
| Baumharz | > 75 | > 75 | > 75 |

Die Ergebnisse des MB-Gradientenofen-Tests untermauern die hohe Chemikalienbeständigkeit der erfindungsgemäßen Sol-Gel-Überzuge 1 bis 3.

**2.7 Steinschlagtest**

Der der Fachwelt bekannte Steinschlagtest unter Multi-Stoßbelastung (2x500 Gramm/2 bar) der Firma AUDI AG lieferte in allen Fällen einen Kennwert von 3 und einen Rostgrad von 2. Demnach erwiesen sich die erfindungsgemäßen Sol-Gel-Überzuge 1 bis 3 zusammen mit den mehrschichtigen Lackierungen als ausreichend stabil gegenüber Steinschlag.

**2.8 Erichsentiefung**

Die Erichsentiefung nach DIN EN ISO 1520: 1995-04 lag bei den Beispielen 4 und 5 bei 4 mm und bei Beispiel 6 bei 3,6 mm.

**2.9 Appearance**

**2.6.1 Visuelle Beurteilung**

Der optische Gesamteindruck der Prüftafeln der Beispiele 4 bis 6 wurde visuell beurteilt; in allen Fällen war er sehr gut.

**2.9.2 Glanz und Haze**

Glanz und Haze der Prüftafeln der Beispiele 4 bis 6 wurden vor und nach der Belastung mit dem Schwitzwasserkonstantklima /SKK) nach DIN 50017 reflektometrisch unter einem Winkel von 20° mit einem Reflektometer der Firma BYK gemessen. Die erhaltenen Ergebnisse finden sich in der Tabelle 3.

Tabelle 3:

| Glanz und Haze der Mehrschichtlackierungen der Beispiele 4 bis 6 mit den erfindungsgemäßen Sol-Gel-Überzüge 1 bis 3 | | |
|---|---|---|
| Beispiele Nr. | Glanz / Haze Vor Belastung | Glanz / Haze Nach SKK-Belastung |
| 4 | 75/6 | 75/8 |
| 5 | 75/6 | 75/7 |
| 6 | 77/6 | 77/7 |

Die erfindungsgemäßen Sol-Gel-Überzuge entsprachen damit auch in dieser Hinsicht den Anforderungen der Praxis.

**Patentansprüche**

1. Sol-Gel-Beschichtungsstoff, enthaltend

(A) eine Acrylatcopolymerisatlösung, enthaltend mindestens ein Acrylatcopolymerisat (A1), herstellbar durch Copolymerisation von mindestens den folgenden Monomeren:

a1) mindestens ein im wesentlichen säuregruppenfreier (Meth)acrylsäureester,

a2) mindestens ein ethylenisch ungesättigtes Monomer, das mindestens eine Hydroxylgruppe pro Molekül trägt und im wesentlichen säuregruppenfrei ist, und

a3) mindestens ein mindestens eine Säuregruppe, die in die entsprechende Säureaniongruppe überführbar ist, pro Molekül tragendes ethylenisch ungesättigtes Monomer;

(B) ein Sol, herstellbar durch Hydrolyse, Kondensation und Komplexierung

B1) mindestens einer hydrolysierbaren Metallverbindung der allgemeinen Formel I

$$MR_n \qquad (I),$$

worin die Variablen und der Index die folgende Bedeutung haben:

M = Aluminium, Titan oder Zirkonium,

R = hydrolysierbare Gruppen, Hydroxygruppen und nicht hydrolysierbare Gruppen, mit der Maßgabe, daß mindestens eine, vorzugsweise mindestens zwei, hydrolysierbare Gruppe(n) vorhanden ist oder sind, und

n = 3 oder 4;

B2) mindestens eines hydrolysierbaren Silans der allgemeinen Formel II

$$Si(R^1)_2(R^2)_2 \qquad (II),$$

worin die Variablen $R^1$ und $R^2$ die folgende Bedeutung haben:

$R^1$ = Alkyl- und/oder Cycloalkylreste und

$R^2$ = Alkoxy- und/oder Cycloalkoxyreste;

und

B3) mindestens eines hydrolysierbaren Silans der allgemeinen Formel III

$$SiR_4 \qquad (III),$$

worin die Variable R die vorstehend angegebene Bedeutung hat;
mit der Maßgabe, daß es sich bei dem Silan (B3) nicht um ein Silan (B2) gemäß der allgemeinen Formel II handelt,

und

(C) 0 bis 40 Gew.-%, bezogen auf die Gesamtmenge des Beschichtungsstoffs, eines Stammlacks, herstellbar durch Hydrolyse und Kondensation mindestens eines hydrolysierbaren Silans (B3) der allgemeinen Formel III.

2. Der Sol-Gel-Beschichtungsstoff nach Anspruch 1, **dadurch gekennzeichnet, daß** der Rest $R^1$ für Methyl-, Ethyl-, Propyl- Isopropyl-, n-Butyl-, sec.-Butyl-, tert.-Butyl-, Pentyl-, Hexyl-, Cyclopropyl-, Cyclobutyl-, Cyclopentyl- und/ oder Cyclohexylgruppen und der Rest $R^2$ für Methoxy-, Ethoxy-, Propoxy-, Isopropoxy-, n-Butoxy-, sec.-Butoxy-, tert.-Butoxy-, Pentyloxy-, Hexyloxy-, Cyclopropyloxy-, Cyclobutyloxy-, Cyclopentyloxyund/oder Cyclohexyloxygruppen steht.

3. Der Sol-Gel-Beschichtungsstoff nach Anspruch 1 oder 2, **dadurch gekennzeichnet, daß** das Molverhältnis von Silan (B2) zu Silan (B3) bei 1 : 10 bis 1 : 1 und insbesondere 1 : 6 bis 1 : 2 liegt.

4. Der Sol-Gel-Beschichtungsstoff nach einem der Ansprüche 1 bis 3, **dadurch gekennzeichnet, daß** das Atomverhältnis von Metall M zu Silizium bei 1 : 10 bis 1 : 1,5 und insbesondere 1 : 6 bis 1 : 2 liegt.

5. Der Sol-Gel-Beschichtungsstoff nach einem der Ansprüche 1 bis 4, **dadurch gekennzeichnet, daß** er aromatenfrei ist.

6. Der Sol-Gel-Beschichtungsstoffnach einem der Ansprüche 1 bis 5, **dadurch gekennzeichnet, daß** er, jeweils bezogen auf seine Gesamtmenge, 1 bis 30, vorzugsweise 2 bis 20 und insbesondere 3 bis 15 Gew.-% der Acrylatcopolymerisatlösung (A) und 5 bis 50, vorzugsweise 10 bis 40 und insbesondere 15 bis 30 Gew.-% des Sols (B) sowie bis zu 94 Gew.-% mindestens eines geeigneten zusätzlichen Bestandteils enthält.

7. Der Sol-Gel-Beschichtungsstoffnach einem der Ansprüche 1 bis 6, **dadurch gekennzeichnet, daß** in den allgemeinen Formeln I und II

   - die nicht hydrolysierbaren Gruppen R Alkylgrupppen, insbesondere mit 1 bis 4 C-Atomen; Alkenylgruppen, insbesondere mit 2 bis 4 C-Atomen; Alkinylgrupppen, insbesondere mit 2 bis 4 C-Atomen; und/oder Arylgruppen, insbesondere mit 6 bis 10 C-Atomen; und

   - die hydrolysierbaren Gruppen R Wasserstoffatome, Alkoxygruppen, insbesondere mit 1 bis 20 C-Atomen; alkoxysubstituierte Alkoxygruppen mit 3 bis 20 C-Atomen; Acyloxygruppen, insbesondere mit 1 bis 4 C-Atomen; Alkylcarbonylgruppen, insbesondere mit 2 bis 6 C-Atomen;

   sind.

8. Der Sol-Gel-Beschichtungsstoff nach Anspruch 7, **dadurch gekennzeichnet, daß**

   - die hydrolysierbaren Gruppen R Methoxy-, Ethoxy-, n-Propoxy-, i-Propoxy, n-Butoxy-, sec.-Butoxy-, beta-Methoxy-ethoxy-, Acetoxy-, Propionyloxy und/oder Acetylgruppen und die

   - die nicht hydrolysierbaren Gruppen R Methyl-, Ethyl-, Propyl-, Butyl- Vinyl-, 1-Propenyl-, 2-Propenyl-, Butenyl-, Acetylenyl-, Propargyl-, Phenyl- und/oder und Naphthylgruppen sind.

9. Der Sol-Gel-Beschichtungsstoff nach einem der Ansprüche 1 bis 8, **dadurch gekennzeichnet, daß** die nicht hydrolysierbaren Gruppen R mindestens eine funktionelle Gruppe, insbesondere mindestens eine Epoxidgruppe, Aminogruppe, olefinisch ungesättigte Gruppe, Mercaptogruppe, und/oder Isocyanatgrupppe und/oder deren Umsetzungsprodukte mit weiteren reaktiven Verbindungen, enthalten.

10. Der Sol-Gel-Beschichtungsstoff nach einem der Ansprüche 1 bis 9, **dadurch gekennzeichnet, daß** zur Komplexierung organische Verbindungen verwendet werden, welche Chelatliganden bilden.

11. Der Sol-Gel-Beschichtungsstoff nach einem der Ansprüche 1 bis 10, **dadurch gekennzeichnet, daß** es sich um einen Sol-Gel-Klarlack handelt.

12. Die Verwendung des Sol-Gel-Beschichtungsstoffs gemäß einem der Ansprüche 1 bis 11 zur Herstellung kratzfester Sol-Gel-Überzüge, insbesondere für einschichtige oder mehrschichtige Lackierungen.

13. Die Verwendung des Sol-Gel-Beschichtungsstoffs nach Anspruch 12, **dadurch gekennzeichnet, daß** es sich um ausgehärtete einschichtige oder mehrschichtige Lackierungen handelt.

14. Die Verwendung des Sol-Gel-Beschichtungsstoffs nach Anspruch 12 oder 13, **dadurch gekennzeichnet, daß** es sich bei den Lackierungen um Fahrzeugerstlackierungen, Fahrzeugreparaturlackierungen, industrielle Lackierungen, inklusive Container Coatings, Kunststofflackierungen und Möbellackierungen handelt.

15. Verfahren zur Herstellung kratzfester Sol-Gel-Überzüge auf einschichtigen oder mehrschichtigen Lackierungen durch

>  (i) Applikation einer einschichtigen oder mehrschichtigen Lackierung auf einem gegebenenfalls grundierten Substrat,

>  (ii) Applikation eines Sol-Gel-Beschichtungsstoffs auf der einschichtigen oder mehrschichtigen Lackierung und

>  (iii) Aushärten des Sol-Gel-Beschichtungsstoffs,

>  **dadurch gekennzeichnet, daß** man hierbei einen Sol-Gel-Beschichtungsstoff gemäß einem der Ansprüche 1 bis 11 verwendet.

16. Das Verfahren nach Anspruch 15, **dadurch gekennzeichnet, daß** man den applizierten Sol-Gel-Beschichtungsstoff durch Bestrahlen mit mittlerer IR-Strahlung aushärtet.

17. Das Verfahren nach Anspruch 15 oder 16, **dadurch gekennzeichnet, daß** die einschichtige oder mehrschichtige Lackierung vollständig ausgehärtet ist.

18. Das Verfahren nach einem der Ansprüche 15 bis 117, **dadurch gekennzeichnet, daß** daß es sich bei den Lakkierungen um Automobilerstlackierungen, Autoreparaturlackierungen, industrielle Lackierungen, inklusive Coil Coatings und Container Coatings, Kunststofflackierungen und Möbellackierungen handelt.

19. Sol-Gel-Überzüge, herstellbar aus einem Sol-Gel-Beschichtungsstoff gemäß einem der Ansprüche 1 bis 11 und/ oder nach dem Verfahren gemäß einem der Ansprüche 15 bis 18.

20. Substrate, enthaltend mindestens einen Sol-Gel-Überzug gemäß Anspruch 19.

**Claims**

1. A sol-gel coating material comprising

>  (A) an acrylate copolymer solution comprising at least one acrylate copolymer (A1) preparable by copolymerizing at least the following monomers:

>>  a1) at least one (meth)acrylic ester which is substantially free of acid groups,

>>  a2) at least one ethylenically unsaturated monomer which bears at least one hydroxyl group per molecule and is substantially free of acid groups, and

>>  a3) at least one ethylenically unsaturated monomer which bears per molecule at least one acid . group which is convertible into the corresponding acid anion group;

>  (B) a sol preparable by hydrolyzing, condensing and complexing

>>  B1) at least one hydrolyzable metal compound of the general formula I

$$MR_n \qquad (I)$$

where the variables and the index have the following meaning:

M = aluminum, titanium or zirconium,

R = hydrolyzable groups, hydroxyl groups and nonhydrolyzable groups with the proviso that there is at least one and there are preferably at least two hydrolyzable group(s), and

n = 3 or 4;

B2) at least one hydrolyzable silane of the general formula II

$$Si(R^1)_2(R^2)_2 \qquad (II)$$

in which the variables $R^1$ and $R^2$ have the following meaning:

$R^1$ = alkyl and/or cycloalkyl radicals and

$R^2$ = alkoxy and/or cycloalkoxy radicals;

and

B3) at least one hydrolyzable silane of the general formula III

$$SiR_4 \qquad (III),$$

in which the variable R is as defined above; with the proviso that the silane (B3) is not a silane (B2) of general formula (II),

and

(C) from 0 to 40% by weight, based on the total amount of the coating material, of a stock varnish preparable by hydrolysis and condensation of at least one hydrolyzable silane (B3) of general formula III.

2. The sol-gel coating material of claim 1, **characterized in that** the radical $R^1$ stands for methyl, ethyl, propyl, isopropyl, n-butyl, sec-butyl, tert-butyl, pentyl, hexyl, cyclopropyl, cyclobutyl, cyclopentyl and/or cyclohexyl groups and the radical $R^2$ stands for methoxy, ethoxy, propoxy, isopropoxy, n-butoxy, sec-butoxy, tert-butoxy, pentyloxy, hexyloxy, cyclopropyloxy, cyclobutyloxy, cyclopentyloxy and/or cyclohexyloxy groups.

3. The sol-gel coating material of claim 1 or 2, **characterized in that** the molar ratio of silane (B2) to silane (B3) is 1 : 10 to 1 : 1 and especially 1 : 6 to 1 : 2.

4. The sol-gel coating material of one of claims 1 to 3, **characterized in that** the atomic ratio of metal M to silicon is 1 : 10 to 1 : 1.5 and especially 1 : 6 to 1 : 2.

5. The sol-gel coating material of any of claims 1 to 4, **characterized in that** it is aromatics free.

6. The sol-gel coating material of any of claims 1 to 5, **characterized in that** it comprises, in each case based on its total amount, 1 to 30, preferably 2 to 20 and especially 3 to 15% by weight of the acrylate copolymer solution (A), and 5 to 50, preferably 10 to 40 and especially 15 to 30% by weight of the sol (B) and also up to 94% by weight of at least one suitable additional constituent.

7. The sol-gel coating material of any of claims 1 to 6, **characterized in that**, in the general formulae I and II,

 - the nonhydrolyzable groups R are alkyl groups, especially of 1 to 4 carbon atoms; alkenyl groups, especially of 2 to 4 carbon atoms; alkynyl groups, especially of 2 to 4 carbon atoms; and/or aryl groups, especially of 6 to 10 carbon atoms; and

- the hydrolyzable groups R are hydrogen atoms, alkoxy groups, especially of 1 to 20 carbon atoms; alkoxy-substituted alkoxy groups of 3 to 20 carbon atoms; acyloxy groups, especially of 1 to 4 carbon atoms; alkylcarbonyl groups, especially of 2 to 6 carbon atoms.

8. The sol-gel coating material of claim 7, **characterized in that**

- the hydrolyzable groups R are methoxy, ethoxy, n-propoxy, i-propoxy, n-butoxy, sec-butoxy, beta-methoxyethoxy, acetoxy, propionyloxy and/or acetyl groups and the

- nonhydrolyzable groups R are methyl, ethyl, propyl, butyl, vinyl, 1-propenyl, 2-propenyl, butenyl, acetylenyl, propargyl, phenyl and/or naphthyl groups.

9. The sol-gel coating material of any of claims 1 to 8, **characterized in that** the nonhydrolyzable groups R contain at least one functional group, especially at least one epoxide group, amino group, olefinically unsaturated group, mercapto group and/or isocyanate group and/or their reaction products with further reactive compounds.

10. The sol-gel coating material of any of claims 1 to 9, **characterized in that** complexing is effected using organic compounds which form chelate ligands.

11. The sol-gel coating material of any of claims 1 to 10, **characterized in that** it is a sol-gel clearcoat material.

12. The use of the sol-gel coating material of any of claims 1 to 11 for producing mar-resistant sol-gel coatings, especially for single-coat or multicoat paint systems.

13. The use of the sol-gel coating material of claim 12, **characterized in that** cured single-coat or multicoat paint systems are concerned.

14. The use of the sol-gel coating material of claim 12 or 13, **characterized in that** the paint systems are vehicle original coatings, vehicle repair coatings, industrial coatings, including container coatings, plastics coatings and furniture coatings.

15. A process for producing mar-resistant sol-gel coatings on single-coat or multicoat paint systems by

(i) applying a single-coat or multicoat paint system to a primed or unprimed substrate,

(ii) applying a sol-gel coating material atop the single-coat or multicoat paint system, and

(iii) curing the sol-gel coating material,

**characterized in that** a sol-gel coating material as claimed in any of claims 1 to 11 is used.

16. The process of claim 15, **characterized in that** the applied sol-gel coating material is cured by irradiation with intermediate IR radiation.

17. The process of claim 15 or 16, **characterized in that** the single-coat or multicoat paint system has been completely cured.

18. The process of any of claims 15 to 17, **characterized in that** the paint systems are automotive original coatings, automotive repair coatings, industrial coatings, including coil coatings and container coatings, plastics coatings and furniture coatings.

19. Sol-gel coatings preparable from a sol-gel coating material as claimed in any of claims 1 to 11 and/or by the process as claimed in any of claims 15 to 18.

20. Substrates comprising at least one sol-gel coating as claimed in claim 19.

**Revendications**

1. Produit de revêtement sol-gel, contenant

   (A) une solution de copolymérisat d'acrylate, contenant au moins un copolymérisat d'acrylate (A1), pouvant être fabriqué par copolymérisation d'au moins les monomères suivants :

      a1) au moins un ester d'acide (méth)acrylique sensiblement exempt de groupes acide,

      a2) au moins un monomère non saturé au plan éthylénique, qui porte au moins un groupe hydroxyle par molécule et est sensiblement exempt de groupes acide, et

      a3) au moins un monomère non saturé au plan éthylénique, portant par molécule au moins un groupe acide, qui peut être transformé dans le groupe d'anion d'acide correspondant ;

   B) un sol pouvant être fabriqué par hydrolyse, condensation et complexation ;

      B1) d'au moins un composé de métal hydrolysable de la formule générale I

$$MRn \qquad (I),$$

      dans laquelle les variables et l'indice ont la signification suivante :

         M = aluminium, titane ou zirconium,

         R = groupes hydrolysables, groupes hydroxyle et groupes non hydrolysables avec la condition qu'au moins un, de préférence au moins deux, groupe(s) hydrolysable(s) est ou sont présent(s), et

         n = 3 ou 4 ;

      B2) d'au moins un silane hydrolysable de la formule générale II

$$Si(R1)2(R2)2 \qquad (II),$$

      dans laquelle les variables R1 et R2 ont la signification suivante :

         R1 = restes d'alkyle et/ou de cycloalkyle et

         R2 = restes d'alcoxy et/ou de cycloalcoxy ;

      et

      B3) d'au moins un silane hydrolysable de la formule générale III

$$SiR4 \qquad (III),$$

      dans laquelle la variable R a la signification indiquée ci-dessus ;
      avec la condition que, en ce qui concerne le silane (B3), il ne s'agit pas d'un silane (B2) selon la formule générale II,

      et

      C) 0 à 40 % de poids, par rapport à la quantité globale du produit de revêtement, d'une laque de base pouvant être fabriquée par hydrolyse et condensation d'au moins un silane hydrolysable (B3) de la formule générale III.

2. Le produit de revêtement sol-gel selon la revendication 1, **caractérisé en ce que** le reste R1 représente des groupes méthyle, éthyle, propyle, isopropyle, n-butyle, sec-butyle, tert-butyle, pentyle, hexyle, cyclopropyle, cyclobutyle, cyclopentyle et/ou cyclohexyle et le reste R2 des groupes méthoxy, éthoxy, propoxy, isopropoxy, n-butoxy, sec-butoxy, tert-butoxy, pentyloxy, hexyloxy, cyclopropyloxy, cyclobutyloxy, cyclopentyloxy et/ou cyclohexyloxy.

3. Le produit de revêtement sol-gel selon la revendication 1 ou 2, **caractérisé en ce que** le rapport molaire du silane (B2) par rapport au silane (B3) est de 1 : 10 jusqu'à 1 : 1 et en particulier de 1 : 6 jusqu'à 1 : 2.

4. Le produit de revêtement sol-gel selon l'une quelconque des revendications 1 à 3, **caractérisé en ce que** le rapport atomique du métal M par rapport au silicium est de 1 : 10 jusqu'à 1 : 1,5 et en particulier de 1 : 6 jusqu'à 1 : 2.

5. Le produit de revêtement sol-gel selon l'une quelconque des revendications 1 à 4, **caractérisé en ce qu'**il est exempt d'aromates.

6. Le produit de revêtement sol-gel selon l'une quelconque des revendications 1 à 5, **caractérisé en ce qu'**il contient par rapport à sa quantité globale, 1 à 30, de préférence 2 à 20, et en particulier 3 à 15 % de poids de la solution de copolymérisat d'acrylate (A) et 5 à 50, de préférence 10 à 40 et en particulier 15 à 30 % de poids du sol (B) et jusqu'à 94 % de poids d'au moins un constituant supplémentaire approprié.

7. Le produit de revêtement sol-gel selon l'une quelconque des revendications 1 à 6, **caractérisé en ce que**, dans les formules générales I et II

   - les groupes R non hydrolysables sont des groupes alkyle, en particulier avec 1 à 4 atomes de carbone ; des groupes alcényle, en particulier avec 2 à 4 atomes de carbone ; des groupes alkynyle, en particulier avec 2 à 4 atomes de carbone; et/ou des groupes aryle, en particulier avec 6 à 10 atomes de carbone ; et

   - les groupes R hydrolysables sont des atomes d'hydrogène, des groupes alcoxy, en particulier avec 1 à 20 atomes de carbone ; des groupes alcoxy substitués par alcoxy avec 3 à 20 atomes de carbone ; des groupes acyloxy, en particulier avec 1 à 4 atomes de carbone ; des groupes alkylcarbonyle, en particulier avec 2 à 6 atomes de carbone.

8. Le produit de revêtement sol-gel selon la revendication 7, **caractérisé en ce que**

   - les groupes hydrolysables R sont des groupes méthoxy, éthoxy, n-propoxy, i-propoxy, n-butoxy, sec-butoxy, bêta-méthoxy-éthoxy, acétoxy, propionyloxy et/ou acétyle et les

   - les groupes R non hydrolysables sont des groupes méthyle, éthyle, propyle, butyle, vinyle, 1-proponyle, 2-proponyle, butonyle, acétylényle, propargyle, phényle et/ou des groupes naphtyle.

9. Le produit de revêtement sol-gel selon l'une quelconque des revendications 1 à 8, **caractérisé en ce que** les groupes R non hydrolysables contiennent au moins un groupe fonctionnel, en particulier au moins un groupe époxy, un groupe amino, un groupe non saturé au plan oléfinique, un groupe mercapto, et/ou un groupe isocyanate et/ou leurs produits de transformation avec d'autres composés réactifs.

10. Le produit de revêtement sol-gel selon l'une quelconque des revendications 1 à 9, **caractérisé en ce qu'**on utilise pour la complexation des composés organiques qui forment des ligands de chélate.

11. Le produit de revêtement sol-gel selon l'une quelconque des revendications 1 à 10, **caractérisé en ce qu'**il s'agit d'une laque transparente sol-gel.

12. L'utilisation du produit de revêtement sol-gel selon l'une quelconque des revendications 1 à 11 pour la fabrication de revêtements sol-gel résistants aux rayures, en particulier pour des peintures à une couche ou à plusieurs couches.

13. L'utilisation du produit de revêtement sol-gel selon la revendication 12, **caractérisée en ce qu'**il s'agit de peintures durcies à une couche ou à plusieurs couches.

**14.** L'utilisation du produit de revêtement sol-gel selon la revendication 12 ou 13, **caractérisée en ce que**, en ce qui concerne les peintures, il s'agit de premières peintures automobiles, de peintures pour réparation automobile, de peintures industrielles, y compris les Container Coatings, de peintures pour plastiques et de peintures pour meubles.

**15.** Procédé pour la fabrication de revêtements sol-gel résistants aux rayures sur des peintures à une couche ou à plusieurs couches par

   (i) application d'une peinture à une couche ou à plusieurs couches sur un substrat éventuellement revêtu d'un apprêt,

   (ii) application d'un produit de revêtement sol-gel sur la peinture à une couche ou à plusieurs couches et

   (iii) durcissement du produit de revêtement sol-gel,

   **caractérisé en ce qu'**on utilise dans le cas présent un produit de revêtement sol-gel selon l'une quelconque des revendications 1 à 11.

**16.** Le procédé selon la revendication 15, **caractérisé en ce qu'**on durcit le produit de revêtement sol-gel appliqué par irradiation avec un rayonnement infrarouge moyen.

**17.** Le procédé selon la revendication 15 ou 16, **caractérisé en ce que** la peinture à une couche ou à plusieurs couches est complètement durcie.

**18.** Le procédé selon l'une quelconque des revendications 15 à 17, **caractérisé en ce que** pour les peintures, il s'agit de premières peintures automobiles, de peintures pour réparation automobile, de peintures industrielles, y compris les Coil Coatings et Container Coatings, de peintures pour plastiques et de peintures pour meubles.

**19.** Des revêtements sol-gel, pouvant être fabriqués à partir d'un produit de revêtement sol-gel selon l'une quelconque des revendications 1 à 11 et/ou selon le procédé conforme à l'une quelconque des revendications 15 à 18.

**20.** Des substrats, contenant au moins un revêtement sol-gel selon la revendication 19.